# EUROPEAN PATENT SPECIFICATION

(11) **EP 3 320 624 B1**
(45) Date of publication and mention of the grant of the patent: **24.08.2022**
(21) Application number: 16748375.9
(22) Date of filing: 07.07.2016
(51) Int. Cl.: H04B 7/02, H04L 5/00, H04L 27/26, H04B 7/06, H04W 84/12

(54) **TECHNIQUES FOR TRANSMITTING/RECEIVING WIRELESS LOCAL AREA NETWORK INFORMATION**
VERFAHREN ZUM SENDEN/EMPFANGEN VON INFORMATIONEN EINES DRAHTLOSEN LOKALEN NETZWERKS
TECHNIQUES POUR TRANSMETTRE/RECEVOIR DES INFORMATIONS DE RÉSEAU LOCAL SANS FIL

(30) Priority: 07.07.2015 US 201562189730 P; 06.07.2016 US 201615202980
(43) Date of publication of application: 16.05.2018
(73) Proprietor: QUALCOMM Incorporated, San Diego, CA 92121-1714 (US)
(72) Inventor: VERMANI, Sameer, San Diego, California 92121-1714 (US); TIAN, Bin, San Diego, California 92121-1714 (US); BHARADWAJ, Arjun, San Diego, California 92121-1714 (US)
(74) Representative: Bardehle Pagenberg Partnerschaft mbB Patentanwälte Rechtsanwälte
(86) International application number: PCT/US2016/041330
(87) International publication number: WO 2017/007931

(56) References cited:
- WO-A1-2015/077056
- WO-A1-2015/081288
- WO-A1-2015/130341
- US-A1- 2015 139 089
- US-A1- 2016 227 532
- JIAYIN ZHANG (HUAWEI): "Preamble structure for 11ax system ; 11-15-0101-01-00ax-preamble-structure-for- 11ax-system", IEEE DRAFT; 11-15-0101-01-00AX-PREAMBLE-STRUCTURE-FOR- 11AX-SYSTEM, IEEE-SA MENTOR, PISCATAWAY, NJ USA, vol. 802.11ax, no. 1, 13 January 2015 (2015-01-13), pages 1-18, XP068082646, [retrieved on 2015-01-13]
- YUJIN NOH (NEWRACOM): "Preamble Structure in 802.11ax ; 11-15-0575-01-00ax-preamble-structure-in-8 02-11ax", IEEE DRAFT; 11-15-0575-01-00AX-PREAMBLE-STRUCTURE-IN-8 02-11AX, IEEE-SA MENTOR, PISCATAWAY, NJ USA, vol. 802.11ax, no. 1, 12 May 2015 (2015-05-12), pages 1-15, XP068094429, [retrieved on 2015-05-12]

## Description

### BACKGROUND

The present disclosure, for example, relates to wireless communication systems, and more particularly to techniques for transmitting and/or receiving wireless local area network (WLAN) information.

Wireless communications systems are widely deployed to provide various types of communication content such as voice, video, packet data, messaging, broadcast, and so on. These systems may be multiple-access systems capable of supporting communication with multiple users by sharing the available system resources (*e*.*g*., time, frequency, and power). A wireless network (*e*.*g*., a WLAN, such as a Wi-Fi network conforming to one or more of the IEEE 802.11 family of standards) may include an access point (AP) that may communicate with one or more stations (STAs) or mobile devices. The AP may be coupled to a network, such as the Internet, and may enable a station or mobile device to communicate via the network (and/or communicate with other devices coupled to the AP).

A protocol or standard used in a wireless network may define a frame structure *(e.g.,* packet structure), including the information that may be transmitted using the frame structure. In some cases, separate but similar frame structures may be defined for downlink frames (used for transmitting data and/or control signals from an AP to a station) and uplink frames (used for transmitting data and/or control signals from a station to an AP).

### SUMMARY

The invention is defined by the appended set of claims.

### BRIEF DESCRIPTION OF THE DRAWINGS

A further understanding of the nature and advantages of the present disclosure may be realized by reference to the following drawings. In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.
FIG. 1 shows a diagram of a wireless local area network (WLAN), in accordance with various aspects of the present disclosure;
FIG. 2A shows an example of a wireless frame usable for wireless communications between an access point and a number of stations, in accordance with various aspects of the present disclosure;
FIG. 2B shows an example of a wireless frame usable for communications between an access point and a number of stations, in accordance with various aspects of the present disclosure;
FIG. 3 shows an exemplary configuration of a first WLAN preamble portion of a wireless frame, in accordance with various aspects of the present disclosure;
FIG. 4 shows an exemplary configuration of a preamble portion of a wireless frame, in accordance with various aspects of the present disclosure;
FIG. 5 shows an example of painting order transmission of code blocks using frequency sub-bands that have overlapping frequency ranges, in accordance with various aspects of the present disclosure;
FIG. 6 shows an exemplary configuration of a preamble portion with different code block sizes and usable for communications between each of a number of stations and an access point (AP), in accordance with various aspects of the present disclosure;
FIG. 7 shows another exemplary configuration of a preamble portion with different code block sizes and usable for communications between each of a number of stations and an AP, in accordance with various aspects of the present disclosure;
FIG. 8 shows another exemplary configuration of a preamble portion with different code block sizes and usable for communications between each of a number of stations and an AP, in accordance with various aspects of the present disclosure;
FIG. 9 illustrates a graph of a cumulative distribution function (CDF) in relation preamble portion length for different transmission bandwidths with and without load balancing in accordance with various aspects of the present disclosure;
FIG. 10 shows exemplary resource unit (RU) configurations for different sub-bands of a preamble portion, in accordance with various aspects of the present disclosure;
FIG. 11 shows a diagram of an apparatus for use in wireless communication, in accordance with various aspects of the present disclosure;
FIG. 12 shows a diagram of an apparatus for use in wireless communication, in accordance with various aspects of the present disclosure;
FIG. 13 shows a diagram of an apparatus, in accordance with various aspects of the present disclosure;
FIG. 14 shows a diagram that illustrates an AP for use in wireless communication, in accordance with various aspects of the present disclosure;
FIG. 15 shows a diagram of a station for use in wireless communication, in accordance with various aspects of the present disclosure; and
FIGs. 16-20 are flowcharts illustrating examples of methods for wireless communication, in accordance with various aspects of the present disclosure.

### DETAILED DESCRIPTION

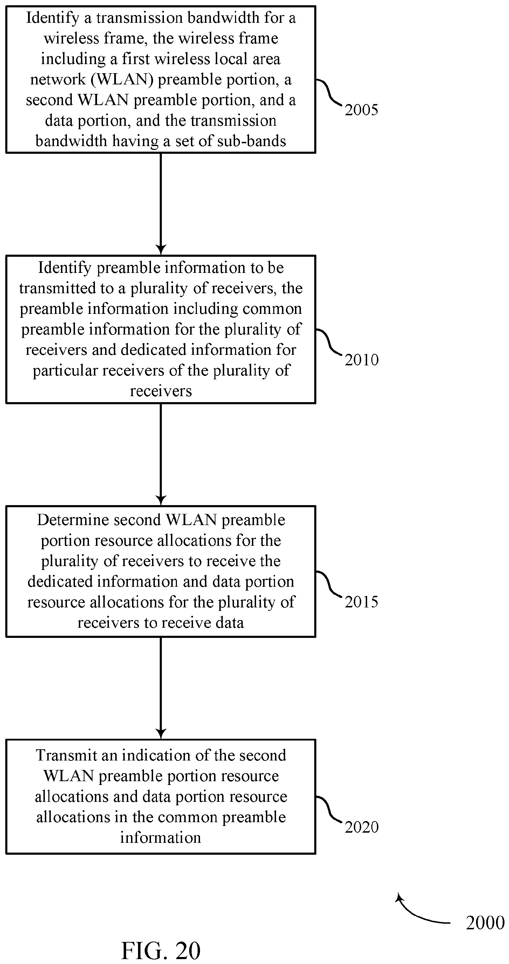

The embodiment of figure 20 falls under the scope of the appended claims. The other embodiments do not fall under the scope of the claims and are to be regarded as mere examples useful to better understand the invention. A preamble of a WLAN frame (or packet) may include information having a variety of purposes. For example, the preamble of a WLAN frame may include information directed to at least one intended receiver (*e.g.*, at least one AP or station). The preamble may also include information directed to non-intended receivers (*e.g.*, information that may inform APs, stations, or other devices not participating in a communication that the radio frequency spectrum band (or channel) used for the communication is busy). Some or all of the information directed to the non-intended receivers may be information conforming to legacy versions of a standard or protocol used to generate and/or transmit the frame.

The techniques described in the present disclosure indicate, for example, how to generate and/or transmit WLAN signaling fields that may be included in a wireless frame. In some examples, the wireless frame may be used for IEEE 802.11ax communications. In some examples, the wireless frame may be used for other types of communications.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

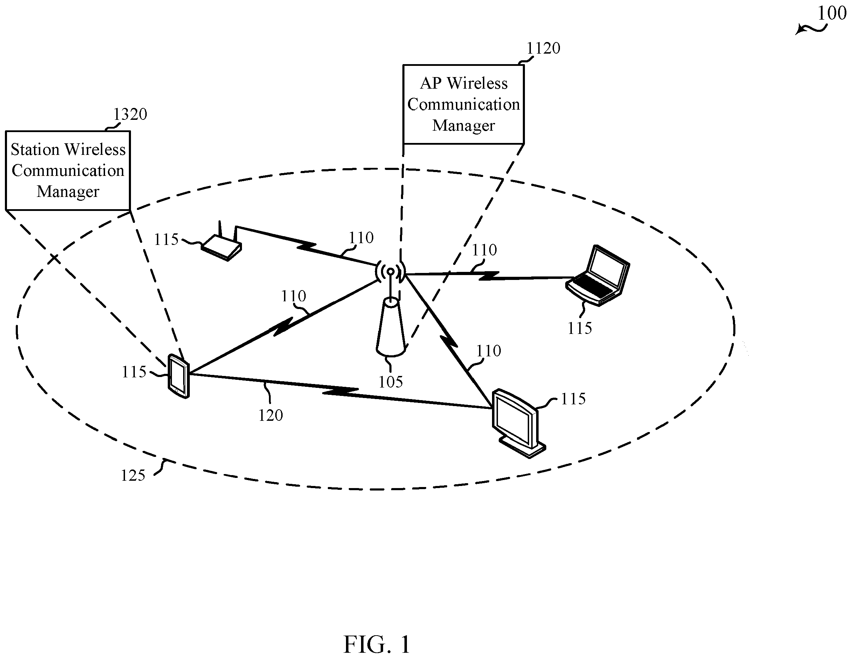

Referring first to **FIG. 1****,** a diagram illustrates an example of a WLAN 100 *(e.g.,* a network implementing at least one of the IEEE 802.11 family of standards), in accordance with various aspects of the present disclosure. The WLAN 100 may include an access point (AP) 105 and one or more wireless devices or stations (STAs) 115, such as mobile stations, personal digital assistants (PDAs), other handheld devices, netbooks, notebook computers, tablet computers, laptops, display devices *(e.g.,* TVs, computer monitors, *etc.*), printers, *etc.* While only one AP 105 is illustrated, the WLAN 100 may include multiple APs 105. Each of the stations 115, which may also be referred to as a receiver, mobile stations (MS), mobile device, access terminal (AT), user equipment (UE), subscriber station (SS), or subscriber unit, may associate and communicate with the AP 105 via a communication link 110. Each AP 105 may have a geographic coverage area 125, such that stations 115 within the geographic coverage area 125 can typically communicate with the AP 105. The stations 115 may be dispersed throughout the geographic coverage area 125. Each station 115 may be stationary or mobile.

Although not shown in FIG. 1, a station 115 can be covered by more than one AP 105 and can therefore associate with one or more APs 105 at different times. A single AP 105 and an associated set of stations may be referred to as a basic service set (BSS). An extended service set (ESS) may include a set of connected BSSs. A distribution system (DS) may be used to connect APs 105 in an extended service set. A geographic coverage area 125 for an AP 105 may be divided into sectors making up only a portion of the coverage area. The WLAN 100 may include APs 105 of different types (*e*.*g*., metropolitan area, home network, *etc.*), with varying sizes of coverage areas and overlapping coverage areas for different technologies. Although not shown, other wireless devices can communicate with the AP 105.

While the stations 115 may communicate with each other through the AP 105 using communication links 110, a station 115 may also communicate directly with another station 115 via a direct wireless link 120. Two or more stations 115 may communicate via a direct wireless link 120 when both stations 115 are in the geographic coverage area 125 of an AP 105, or when one or neither station 115 is within the geographic coverage area 125 of the AP 105. Examples of direct wireless links 120 may include Wi-Fi Direct connections, connections established using a Wi-Fi Tunneled Direct Link Setup (TDLS) link, and other peer-to-peer (P2P) group connections. The stations 115 in these examples may communicate according to a WLAN radio and baseband protocol, including physical and media access control (MAC) layers, described by the IEEE 802.11 family of standards, including, but not limited to, 802.11b, 802.11g, 802.11a, 802.11n, 802.11ac, 802.11ad, 802.11ah, 802.11ax, *etc.* In other implementations, other P2P connections and/or ad hoc networks may be implemented within the WLAN 100.

In the WLAN 100, an AP 105 may transmit messages to or receive messages from at least one station 115 according to various versions of the IEEE 802.11 standard, including new wireless standards. In some examples, the AP 105 may include an AP wireless communication manager 1120. The AP wireless communication manager 1120 may be used to generate and/or transmit downlink frames and/or to receive uplink frames, including WLAN wireless frames, such as high efficiency (HE) WLAN wireless frames. Likewise, a station 115 may include a station wireless communication manager 1320. The station wireless communication manager 1320 may be used to receive downlink frames and/or to generate and/or transmit uplink frames, including WLAN wireless frames.

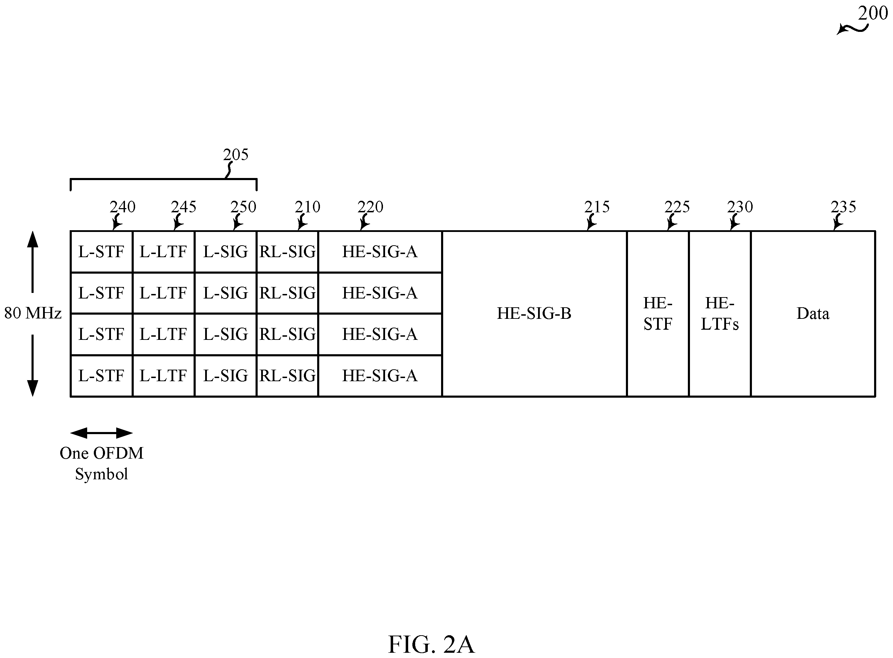

**FIG. 2A** shows an example of a wireless frame 200 usable for communications between an AP and a number of stations, in accordance with various aspects of the present disclosure. In some examples, the AP may be an example of aspects of the AP 105 described with reference to FIG. 1, and the number of stations may be examples of aspects of the stations 115 described with reference to FIG. 1.

The wireless frame 200 may include a legacy WLAN preamble field 205, a repeated legacy WLAN signaling field 210, a first WLAN HE preamble portion 215 *(e.g.,* an IEEE 802.11ax HE-SIG-B field), a second WLAN HE preamble portion 220 *(e.g.,* an IEEE 802.11ax HE-SIG-A field), a WLAN HE short training field (STF) 225 *(e.g.,* an IEEE 802.11ax HE-STF field), at least one WLAN HE long training field (LTF) 230 (*e*.*g*., an IEEE 802.11ax HE-LTF field), and/or a data portion 235 *(e.g.,* a data field or data subfield). In some examples, such as illustrated in FIG. 2A, the fields may be transmitted in the following order: legacy WLAN preamble field 205, repeated legacy WLAN signaling field 210, second WLAN HE preamble portion 220, first WLAN HE preamble portion 215, HE-STF 225, HE-LTFs 230, data portion 235.

The wireless frame 200 may be transmitted over a radio frequency spectrum band, which in some examples may include a plurality of sub-bands. In some examples, the radio frequency spectrum band may have a bandwidth of 80 MHz, and each of the sub-bands may have a bandwidth of 20 MHz.

The legacy WLAN preamble field 205 may include legacy STF (L-STF) information 240, legacy LTF (L-LTF) information 245, and/or legacy signaling (L-SIG) information 250. When the radio frequency spectrum band includes a plurality of sub-bands, the L-STF, L-LTF, and L-SIG information may be duplicated and transmitted in each of the plurality of sub-bands. The L-SIG information 250 may be further duplicated and transmitted in each sub-band of the repeated legacy WLAN signaling field 210 as repeated legacy signaling (RL-SIG) information. The repeated legacy WLAN signaling field 210 may indicate to a station that the wireless frame 200 is an IEEE 802.11ax frame.

The second WLAN HE preamble portion 220 may include high efficiency WLAN signaling information usable by stations that are identified to receive communications as well as stations other than the number of stations that are identified to receive communications in the wireless frame 200. In some examples, the second WLAN HE preamble portion 220 may include two orthogonal frequency division multiple access (OFDMA) symbols that include information usable by the identified number of stations to receive the wireless frame 200 to decode the first WLAN HE preamble portion 215. When the radio frequency spectrum band includes a plurality of sub-bands, the information (e.g., HE-SIG-A information) included in the second WLAN HE preamble portion 220 may be duplicated and transmitted in each sub-band of the second WLAN HE preamble portion 220.

The first WLAN HE preamble portion 215 may include high efficiency WLAN signaling information usable by the number of stations identified to receive wireless communications in the wireless frame 200. More specifically, the first WLAN HE preamble portion 215 may include information usable by the number of stations to decode data received in the data portion 235. The first WLAN HE preamble portion 215 may be encoded separately from the second WLAN HE preamble portion 220. In some examples, the first WLAN HE preamble portion 215 may include scheduling information for both spatial domain multi-user multiple-input-multiple-output (MU-MIMO) and frequency domain (OFDMA). In some examples, the first WLAN HE preamble portion 215 may have a common section that may include common HE preamble information for multiple receivers and a dedicated (per-user) section that may include dedicated HE preamble information for particular receivers. In various examples, the first WLAN HE preamble portion 215 may include dedicated HE preamble information, and not common HE preamble information.

In some examples, the second WLAN HE preamble portion 220 may include an identifier a basic service set (BSS) color; bandwidth information used by a station; an indicator of whether a per-user guard interval (GI) is used in the first WLAN HE preamble portion 215 *(e.g.,* an indicator of whether GI lengths used in the first WLAN HE preamble portion 215 may vary per-user); an indicator of whether the frame is a downlink frame or an uplink frame; an indicator of whether the downlink frame is a null data packet; a cyclic redundancy check (CRC) for the second WLAN HE preamble portion 220; and/or information pertaining to channel bonding.

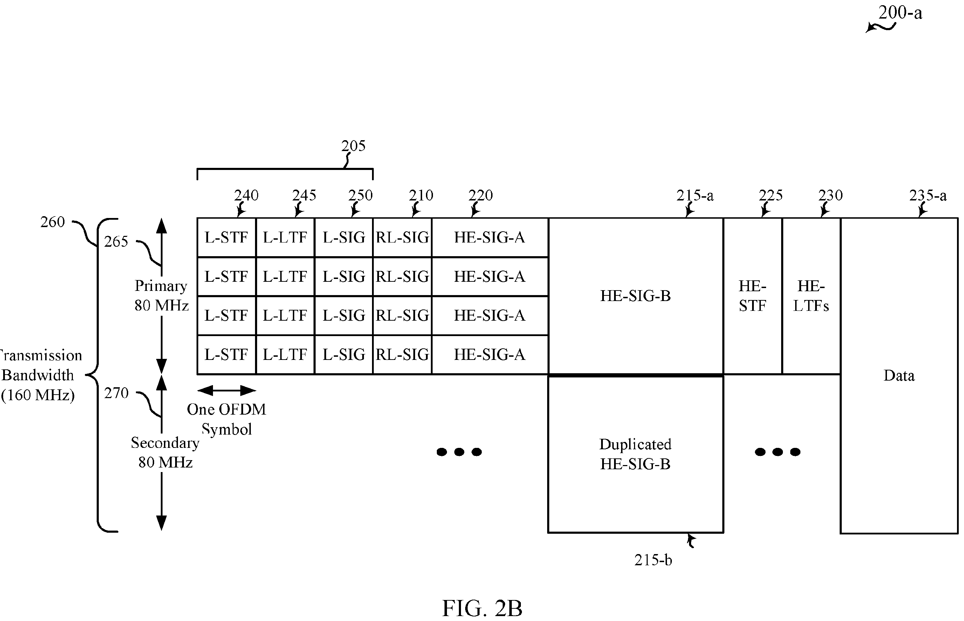

**FIG. 2B** shows an example of a wireless frame 200-a usable for communications between an AP and a number of stations, in accordance with various aspects of the present disclosure. In some examples, as with FIG. 2A, the AP may be an example of aspects of the AP 105 described with reference to FIG. 1, and the number of stations may be examples of aspects of the stations 115 described with reference to FIG. 1.

The wireless frame 200-a may include the different fields as described with respect to wireless frame 200 of FIG. 2A transmitted in a primary 80 MHz bandwidth 265. In the example of FIG. 2A, at least some of the different fields may be duplicated in a secondary 80 MHz bandwidth 270. The wireless frame 200-a of this example may be transmitted over transmission bandwidth 260 of the radio frequency spectrum band that spans 160 MHz. Similarly as discussed with respect to FIG. 2A, transmission bandwidth 260 may include a plurality of sub-bands, such as eight 20 MHz sub-bands. In some examples, first WLAN HE preamble portion 215-a may be transmitted in the primary 80 MHz bandwidth 265 and a duplicated version of the first WLAN HE preamble portion 215-b may be transmitted in the secondary 80 MHz bandwidth 270. The duplicated, or redundant, version of the first WLAN HE preamble portion 215-b may include the same information as the first WLAN HE preamble portion 215-a transmitted in the primary 80 MHz bandwidth 265, such that a receiver that receives only one of the versions of the first WLAN HE preamble portion 215 may obtain necessary information to receive and process the wireless frame 200. In this example, the data portion 235-a may span the entire 160 MHz transmission bandwidth 260. In this example, first WLAN HE preamble portion 215-a may span a subset of the sub-bands to occupy the primary 80 MHz bandwidth 265, and the duplicated first WLAN HE preamble portion 215-b may span a second subset of the sub-bands to occupy the secondary 80 MHz bandwidth 270.

In some examples, data for a particular receiver may be included in a same sub-band as dedicated HE preamble information for that particular receiver. In other examples, data for a particular receiver may be included in a different sub-band as dedicated HE preamble information for the receiver. For example, if the first WLAN HE preamble portion 215-a is also transmitted in duplicated first WLAN HE preamble portion 215-b, and the data portion 235-a spans a larger bandwidth than the first WLAN HE preamble portion 215-a, dedicated HE preamble information for a particular receiver may be transmitted in a different 20 MHz sub-band than the data for the receiver. Furthermore, some receivers, such as some stations 115 of FIG. 1, may have multiple transceiver chains that are used to receive communications in different portions of transmission bandwidth 260, such as a first transceiver chain for the primary 80 MHz bandwidth 265 and a second transceiver chain for the secondary 80 MHz bandwidth 270. Such a receiver may realize power savings from having one of the transceiver chains powered, but not the second transceiver chain. By transmitting duplicated versions of first WLAN HE preamble portion 215, a receiver may receive the entire first WLAN HE preamble portion 215 without having to power its second transceiver chain. In such examples, dedicated HE preamble information may be transmitted to a particular receiver in an i^{th} 20 MHz sub-band of the primary 80 MHz bandwidth 265, and data may be transmitted to that particular receiver in a j^{th} 20 MHz sub-band of the secondary 80 MHz bandwidth 270. In such cases, resource allocation information for the data portion 235-a for the particular receiver may be located in the first WLAN HE preamble portion 215-a transmitted in the primary 80 MHz bandwidth 265. Furthermore, such techniques may allow for avoidance of potential interference that may be present in certain sub-bands, and may provide for load balancing for information transmitted using the transmission bandwidth 260.

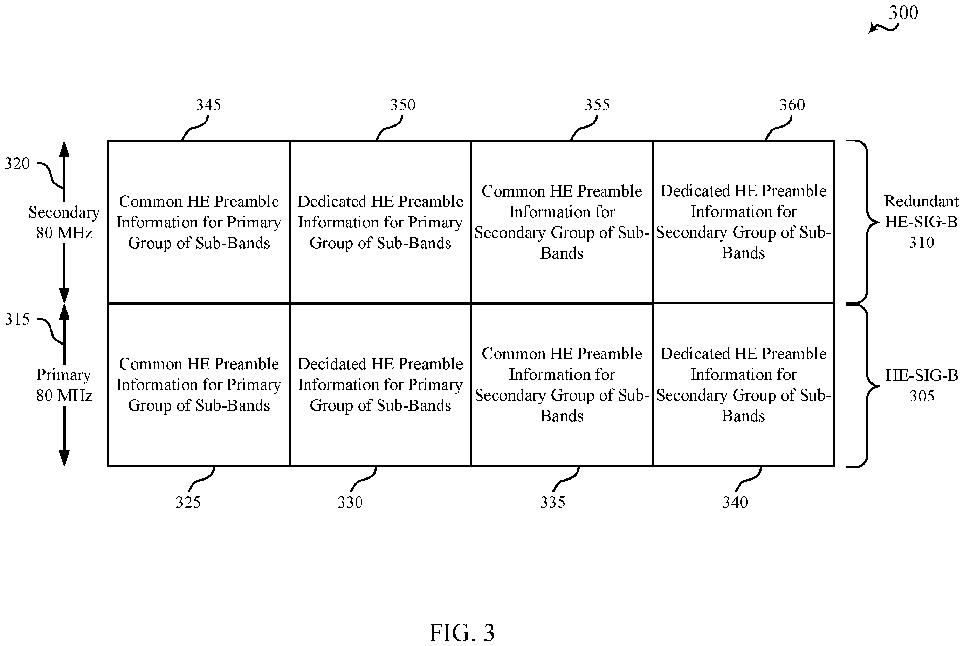

FIG. 3 shows an exemplary configuration 300 of the first WLAN preamble portion *(e.g.,* a first WLAN HE preamble portion 215 of FIGs. 2A or 2B) of a wireless frame, in accordance with various aspects of the present disclosure. In the example of FIG. 3, the HE preamble portion may be an IEEE 802.11ax HE-SIG-B 305 transmitted in a primary 80 MHz bandwidth 315, along with a redundant version of the HE-SIG-B 310 transmitted in a secondary 80 MHz bandwidth 320. The HE preamble portion, HE-SIG-B 305, may include common HE preamble information and dedicated HE preamble information that are segregated in time segments of the HE preamble portion. For example, HE-SIG-B 305 may be divided into a first segment 325, a second segment 330, a third segment 335, and a fourth segment 340. The first segment 325 may include information common to each of a number of receivers to receive the HE preamble portion for the primary subset of sub-bands of the primary 80 MHz bandwidth 315. The second segment 330 may include dedicated information for a particular receiver of the number of receivers to receive the HE preamble portion for the primary subset of sub-bands of the primary 80 MHz bandwidth 315. The third segment 335 may include information common to each of a number of receivers to receive the HE preamble portion for the secondary subset of sub-bands of the secondary 80 MHz bandwidth 320. The fourth segment 340 may include dedicated information for a particular receiver of the number of receivers to receive the HE preamble portion for the secondary subset of sub-bands of the secondary 80 MHz bandwidth 320. The redundant version of the HE-SIG-B 310 may include corresponding segments 345 through 360 that are redundant versions of segments 325 through 340, respectively. Each of segments 325 through 340 may include a number of information blocks, or code blocks, that may be separately encoded. Furthermore, the segments that contain dedicated HE preamble information (*e*.*g*., segments 330, 340, 350, and 360) may include one or more code blocks that may be separately encoded for each of the identified number of stations.

The first segment 325 of the HE preamble portion may, for example, include information usable by the identified number of stations to decode the separately encoded information blocks included in the second segment 330 of the HE preamble portion *(e.g.,* the information included in the first segment 325 may be used by a station to decode its respective separately dedicated HE preamble information encoded code block in the second segment 330). Similarly, first redundant segment 345 may include information for the identified number of stations to decode the separately encoded information blocks included in the second redundant segment 350. Likewise, third segment 335 may include information for the identified number of stations to decode the separately encoded information blocks included in the fourth segment 340 and third redundant segment 355 may include information for the identified number of stations to decode the separately encoded information blocks included in the fourth redundant segment 360.

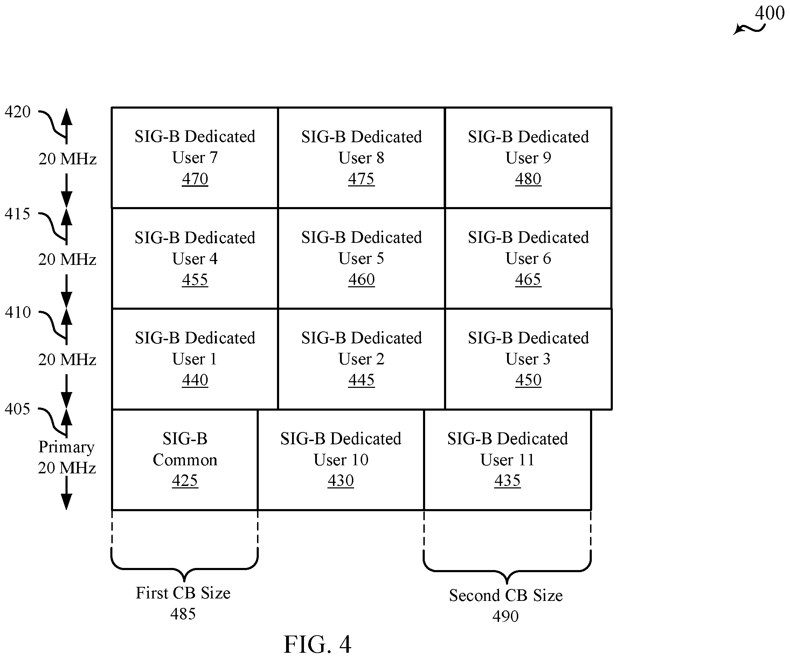

Each of the separately encoded information blocks of second segment 330, second redundant segment 350, fourth segment 340, and fourth redundant segment 360 may include information usable by an identified receiver to receive *(e.g.,* decode) data transmitted in the data portion 235 of FIG. 2. In some examples, the separately encoded information blocks may be transmitted within one OFDM symbol (*e*.*g*., bleeding of an information block across OFDM symbols may be prohibited). Each of the separately encoded information blocks may also be transmitted in one sub-band of the shared radio frequency spectrum band (*e.g.,* a single information block may be transmitted in one sub-band, though different information blocks may be transmitted in different sub-bands, for example as shown with reference to FIG. 4 for SIG-B dedicated information for various users in different sub-bands such that information of the WLAN preamble is different in one sub-band than the information of the WLAN preamble in a second sub-band). In some examples (*e*.*g*., when a higher modulation and coding scheme (MCS) is used for an OFDM symbol), at least two separately encoded information blocks may be transmitted in the same OFDM symbol and sub-band. In other examples, the separately encoded information blocks may be allowed to bleed across OFDM symbols or sub-bands. In some examples, the separately encoded information blocks may be mapped to OFDM symbols associated with different MCSs.

A downlink frame including the first WLAN HE preamble portion 215 of FIG. 2 or exemplary configuration 300 of FIG. 3 may be configured for transmissions to multiple users *(e.g.,* in a multiple user (MU) mode) or a transmission to a single user *(e.g.,* in a single user (SU) mode). The information included in the first segment 325 may differ depending on whether the wireless frame is configured in the MU mode or the SU mode. The structure of the wireless frame described with reference to FIGs. 2 and 3 may be useful in that the first WLAN HE preamble portion 215 may be independent of the number of stations receiving communications in a frame.

In some examples, the first segment 325 of the HE preamble portion may include at least one of an indicator of a number of symbols in the first WLAN HE preamble portion 215; an indicator of a MCS used for the first WLAN HE preamble portion 215; an indication of whether the first WLAN HE preamble portion 215 is formatted for a single user (*e.g.,* single station) or multiple users (*e*.*g*., multiple stations); an indicator of an amount of frequency error (FE); an indicator of GI length; an indicator of a LTF compression factor used in a WLAN LTF of a downlink frame; an indicator of the number of WLAN LTFs (where the total number of WLAN LTFs can be different from the number of data streams); and/or a CRC for the first segment 325. In some examples, a separately encoded information blocks may include at least one of an indicator of whether resources in a subsequent data stream are allocated as OFDMA or MU-MIMO resources; an indicator of a type of resource allocation in the data stream; a station identifier (ID); per-user (*e*.*g*., per-station) information such as an indicator of a MCS used for the data stream, an indicator of coding information used for the data stream, an indicator of a number of spatial streams (NSS) used in the data stream, an indicator of whether space-time block coding (STBC) is used in the data stream, or an indicator of whether transmission beamforming (TxBF) is used in the data stream; and/or a CRC.

While the structure of the example of FIG. 3 shows a sequential structure in which information for the primary 80 MHz bandwidth 315 is provided followed by information for the secondary 80 MHz bandwidth 320, such information may be provided in a non-sequential manner, or in a different sequence than illustrated. For example, common information for the primary 80 MHz bandwidth 315 and secondary 80 MHz bandwidth 320 may be provided first, followed by dedicated information for the primary 80 MHz bandwidth 315 and secondary 80 MHz bandwidth 320. Furthermore, in some examples, the first WLAN HE preamble portion 215 may not include common information, in which case dedicated information for the primary 80 MHz bandwidth 315 and secondary 80 MHz bandwidth 320 may be provided using any available sequence. In some examples, the border between the primary 80 MHz bandwidth 315 and secondary 80 MHz bandwidth 320 may be indicated in second WLAN HE preamble portion 220, common information portions of the first WLAN HE preamble portion 215, or through a bit in a dedicated information portion of the first WLAN HE preamble portion 215 *(e.g.,* to identify a particular dedicated HE-SIG-B field to apply to the primary or secondary bandwidth).

In some examples, information included in the first WLAN HE preamble portion 215 may be configured to provide load-balancing. Information transmitted in the first WLAN HE preamble portion 215, in such examples, does not need to be sequential. In some examples, explicit bits may be used in each dedicated HE preamble information block to indicate the 20 MHz channel where data is located or even indicating the exact RU allocated to it directly. In some examples, common HE preamble information or dedicated HE preamble information of the first WLAN HE preamble portion 215 may support 996 tone RU allocation, which corresponds to an 80 MHz allocation to a receiver.

**FIG. 4** shows an example of a preamble portion 400 of a wireless frame usable for communications between each of a number of stations and an AP, in accordance with various aspects of the present disclosure. In some examples, the AP may be an example of aspects of the AP 105 described with reference to FIG. 1, and the number of stations may be examples of aspects of the stations 115 described with reference to FIG. 1.

The HE preamble portion 400 may span a number of 20 MHz sub-bands, which may include a primary 20 MHz sub-band 405, and secondary 20 MHz sub-bands 410 through 420. In this example, a first code block (CB) 425 may include SIG-B common information and may have a first CB size 485. Other CBs 430 through 480 may include dedicated HE preamble information for particular users (*e*.*g*., users 1 through 11 in this example) or receivers. The other CBs 430 through 480 may have a second CB size 490. In this example, first CB 425, as mentioned, includes common HE preamble information to be transmitted to a plurality of receivers. As shown in FIG. 4, information for HE preamble portion 400, a WLAN preamble, has information of the WLAN preamble in a first sub-band that is different than information of the WLAN in the other sub-bands. For example, secondary 20 MHz sub-band 420 includes SIG-B dedicated user 7 preamble information in CB 470, and secondary 20 MHz sub-band 415 includes SIG-B dedicated user 4 preamble information in CB 455.

In this example, the common HE preamble information is located in the primary 20 MHz sub-band 405. In some examples, the primary 20 MHz sub-band 405 may have a higher likelihood of being interference-free than other of sub-bands 410 through 420, such as due to channel clearance techniques that may rely on the primary 20 MHz sub-band 405, for example. Furthermore, in this example, the first CB size 485 may be different than the second CB size 490. The first CB size 485 may be selected to provide the common HE preamble information, and optionally may be selected to provide the common HE preamble information and dedicated HE preamble information for one or more of a plurality of receivers. Because the common HE preamble information may contain a different amount of information than dedicated HE preamble information for a receiver, in order to avoid preamble information CBs bleeding across CBs, the CB size may be selected to provide all of the associated information for the common preamble information and/or dedicated preamble information. Such techniques may result in CB boundaries that do not necessarily align with symbol boundaries. The second CB size 490, in some examples, may be selected to provide dedicated HE preamble information for an integer number of receivers. In the example of FIG. 4, each 20 MHz sub-band 405 through 420 may have frequencies that do not overlap.

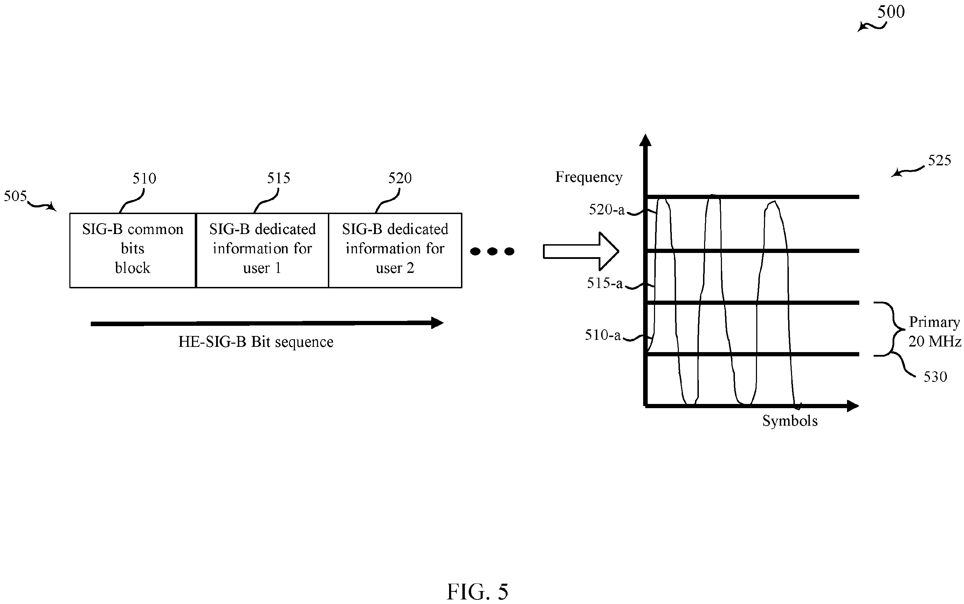

In situations where one or more 20 MHz sub-bands to have frequencies that overlap, various examples provide for painting encoded bits over different sub-bands in a sequential manner. **FIG. 5** shows an example 500 of painting order transmission of code blocks using frequency sub-bands that have overlapping frequency ranges, in accordance with various aspects of the present disclosure. An HE preamble portion 505 may be transmitted between an AP and one or more identified stations over two or more 20 MHz sub-bands that have overlapping frequencies. In some examples, the AP may be an example of aspects of the AP 105 described with reference to FIG. 1, and the number of stations may be examples of aspects of the stations 115 described with reference to FIG. 1.

In the example, of FIG. 5, HE preamble portion 505 may include a first segment 510, which may include common HE preamble information in a CB, followed by a second segment 515, which may be a second HE preamble portion that may include dedicated HE preamble information for a first receiver, and third segment 520, an HE preamble portion that may include dedicated HE preamble information for a second receiver. In this example, CBs of the HE preamble portion 505 may be encoded over OFDM symbols and transmitted over the frequency sub-bands as indicated in illustration 525, in which a first segment 510 is transmitted using a primary 20 MHz sub-band 530 as indicated at 510-a, second segment 515 is transmitted using a secondary 20 MHz sub-band as indicated at 515-a, and third segment 520 is transmitted using another secondary 20 MHz sub-band as indicated at 520-a. In some examples, sub-band selection order may be started with the primary 20 MHz sub-band 530 to that the HE preamble common information can be contained in a symbol transmitted using the primary 20 MHz sub-band 530. From the primary 20 MHz sub-band, symbols for subsequent segments, including examples of second segment 515, third segment 520, *etc.,* may go up or down in frequency, with an upward start illustrated in FIG. 5. As the sequence of symbol transmissions proceeds, sub-bands may be selected based on the prior sub-band, and whether any higher or lower sub-bands are available.

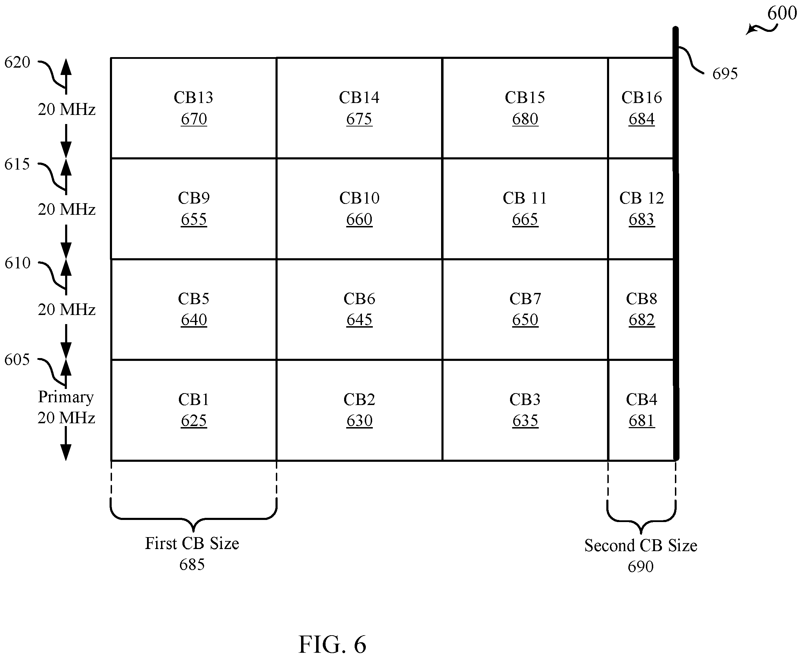

**FIG. 6** shows an example of a preamble portion 600 with different code block sizes and usable for communications between each of a number of stations and an AP, in accordance with various aspects of the present disclosure. In some examples, the AP may be an example of aspects of the AP 105 described with reference to FIG. 1, and the number of stations may be examples of aspects of the stations 115 described with reference to FIG. 1.

The HE preamble portion 600 may span a number of 20 MHz sub-bands 605 through 620, which may include a primary 20 MHz sub-band 605, and secondary 20 MHz sub-bands 610 through 620. In this example, a first group of code blocks (CBs) 625 through 680 may have a first CB size 685 and a second group of CBs 681 through 684 may have a second CB size 690. In this example, both the first group of CBs 625 through 680 and the second group of CBs 681 through 684 may include dedicated HE preamble information for particular users or receivers. The first CB size 685 may be selected to provide dedicated HE preamble information for an integer number of receivers (*e*.*g.*, two or three receivers), and the second CB size 690 may be selected to align with the boundary 695 of a last transmitted symbol. Providing multiple receivers in one CB may allow for amortization of CRC/tail overhead for the associated blocks. In some examples, the second CB size 690 may be sufficient to provide dedicated HE preamble information for one or more receivers, followed by one or more padding bits to align with the last symbol boundary 695. In other examples, the second CB size 690 may not be sufficient to provide dedicated HE preamble information for any receivers, and may include padding bits to align with the last symbol boundary 695. In further examples, if the second CB size 690 is not sufficient to provide dedicated HE preamble information, the CB may be combined with an adjacent CB to make a larger size CB and reduce the number of CBs that the receiver has to decode. In some examples, CB sizes for different CBs may be mapped to MCS used for transmissions.

In this example, the HE preamble portion 600 does not include any common HE preamble information, and such information may be included as needed in, for example, second WLAN HE preamble portion 220 of FIG. 2. The dedicated HE preamble information for one or more receivers may be encoded per 20 MHz sub-band 605 through 620, with CBs having either the first CB size 685 or the second CB size 690. As mentioned above, in some examples the first CB size 685 may be selected to provide that an integer number of users fit into one CB, and thus dedicated SIG-B information for a particular receiver does not bleed across code block boundaries, or across 20 MHz boundaries. In some examples, each CB 625 through 684 may be encoded using terminated binary convolutional coding (BCC) encoding for each block *(e.g.,* each CB 625 through 684 has a CRC and tail). In other examples, tail biting encoding may be used. Techniques of FIG. 6 for transmitting a HE preamble portion 600 may allow for full load balancing of the HE preamble portion 600, through selection of CBs for transmission of preamble information. A receiver receiving such a HE preamble portion 600 may have a capability to receive up to two block sizes.

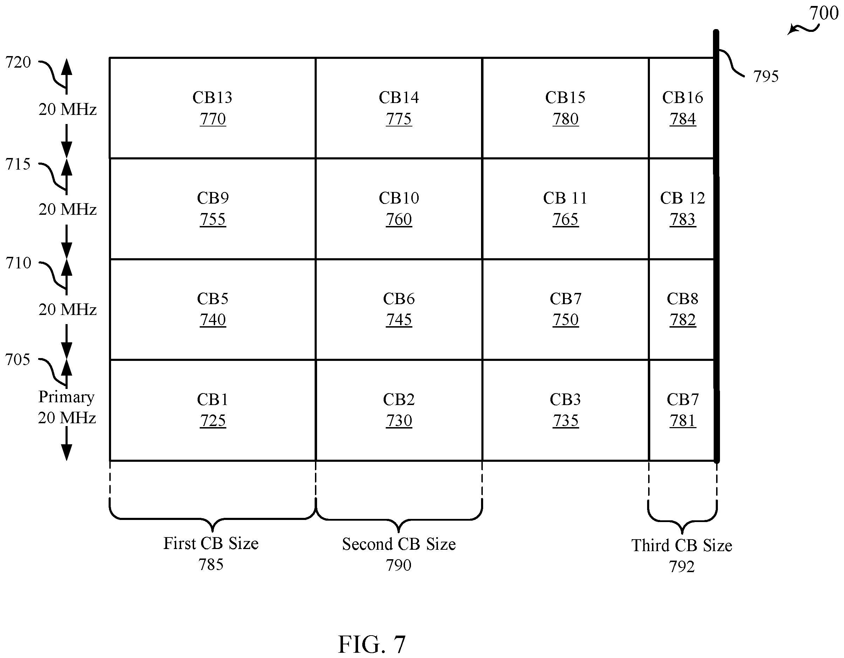

**FIG. 7** shows another example of a preamble portion 700 with different code block sizes and usable for communications between each of a number of stations and an AP, in accordance with various aspects of the present disclosure. In some examples, the AP may be an example of aspects of the AP 105 described with reference to FIG. 1, and the number of stations may be examples of aspects of the stations 115 described with reference to FIG. 1.

The HE preamble portion 700 may span a number of 20 MHz sub-bands 705 through 720, which may include a primary 20 MHz sub-band 705, and secondary 20 MHz sub-bands 710 through 720. In this example, a first group of CBs 725, 740, 755, and 770 may have a first CB size 785, a second group of CBs 730, 735, 745, 750, 760, 765, 775, and 780 may have a second CB size 790, and a third group of CBs 781 through 784 may have a third CB size 792. In this example, the first group of CBs 725, 740, 755, and 770 may include common HE preamble information for the associated 20 MHz sub-band 705 through 720, and may optionally include dedicated HE preamble information for one or more receivers. The second group of CBs 730, 735, 745, 750, 760, 765, 775, and 780 and the third group of CBs 781 through 784 may include dedicated HE preamble information for particular users or receivers. The first CB size 785 may be selected to provide common HE preamble information and dedicated HE preamble information for an integer number of receivers (*e*.*g*., one or more receivers), the second CB size 790 may be selected to provide dedicated HE preamble information for an integer number of receivers (*e*.*g*., two or three receivers), and the third CB size 792 may be selected to align with the boundary 795 of a last transmitted symbol. Providing multiple receivers in one CB may allow for amortization of CRC/tail overhead for the associated blocks, although information for a signal receiver may be provided in a particular block. In some examples, the third CB size 792 may be sufficient to provide dedicated HE preamble information for one or more receivers, followed by one or more padding bits to align with the last symbol boundary 795. In other examples, the third CB size 792 may not be sufficient to provide dedicated HE preamble information for any receivers, and may include padding bits to align with the last symbol boundary 795. In further examples, similarly as discussed above, if the third CB size 792 is not sufficient to provide dedicated HE preamble information, the CB may be combined with an adjacent CB to make a larger size CB and reduce the number of CBs that the receiver has to decode. In some examples, CB sizes for different CBs may be mapped to MCS used for transmissions.

The dedicated HE preamble information for one or more receivers may be encoded per 20 MHz sub-band 705 through 720, with CBs having either the first CB size 785 or the second CB size 790. As mentioned above, in some examples the first CB size 785 may be selected to provide that common HE preamble information and, optionally, an integer number of users fit into one CB, and thus the common HE preamble information and optional dedicated SIG-B information for a particular receiver does not bleed code block boundaries, or across 20 MHz boundaries. Likewise, second CB size 790 may be selected to provide that an integer number of users fit into one CB, and thus the dedicated SIG-B information for a particular receiver does not bleed code block boundaries, or across 20 MHz boundaries. In some examples, each CB 725 through 784 may be encoded using terminated binary convolutional coding (BCC) encoding for each block *(e.g.,* each CB 725 through 784 has a CRC and tail). In other examples, tail biting encoding may be used. Techniques of FIG. 7 for transmitting a HE preamble portion 700 may allow for full load balancing of the HE preamble portion 700, through selection of CBs for transmission of preamble information. A receiver receiving such a HE preamble portion 700 may have a capability to receive up to three block sizes.

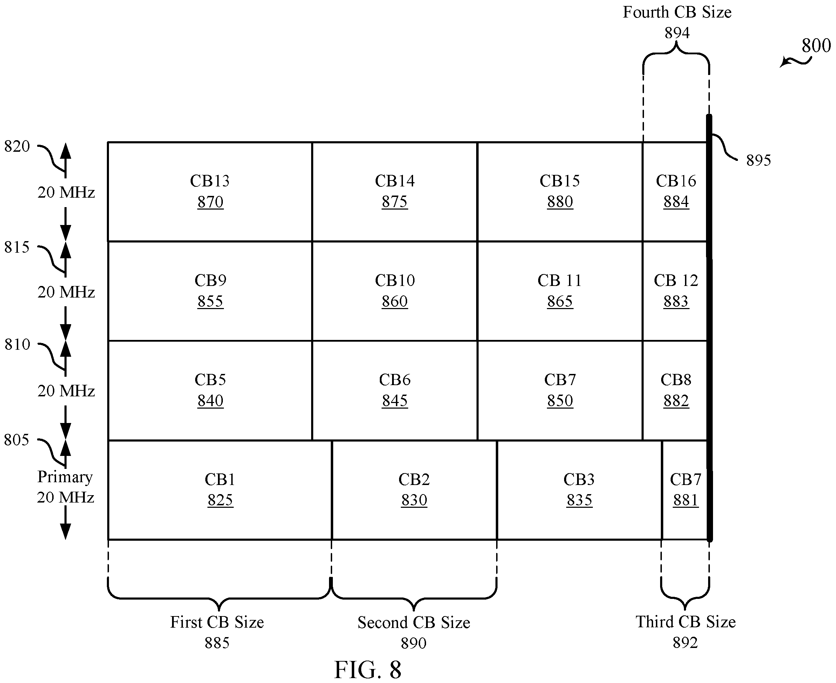

**FIG. 8** shows another example of a preamble portion 800 with different code block sizes and usable for communications between each of a number of stations and an AP, in accordance with various aspects of the present disclosure. In some examples, the AP may be an example of aspects of the AP 105 described with reference to FIG. 1, and the number of stations may be examples of aspects of the stations 115 described with reference to FIG. 1.

The HE preamble portion 800 may span a number of 20 MHz sub-bands 805 through 820, which may include a primary 20 MHz sub-band 805, and secondary 20 MHz sub-bands 810 through 820. In this example, a first CB 825 may have a first CB size 885, a second group of CBs 830 through 880 may have a second CB size 890, a third CB 881 may have a third CB size 892, and a fourth group of CBs 882 through 884 may have a fourth CB size 894. In this example, the first CB 825 may include common HE preamble information for the each of the 20 MHz sub-bands 805 through 820, and may optionally include dedicated HE preamble information for one or more receivers. The second group of CBs 830 through 880, the third CB 881, and the fourth group of CBs 881 through 884 may include dedicated HE preamble information for particular users or receivers. The first CB size 885 may be selected to provide common HE preamble information and dedicated HE preamble information for an integer number of receivers (*e*.*g*., one or more receivers), the second CB size 890 may be selected to provide dedicated HE preamble information for an integer number of receivers (*e*.*g*., two or three receivers), and the third CB size 892 and fourth CB size 894 may be selected to align with the boundary 895 of a last transmitted symbol. Providing multiple receivers in one CB may allow for amortization of CRC/tail overhead for the associated blocks, although information for a signal receiver may be provided in a particular block. In some examples, the third CB size 892 or fourth CB size 894 may be sufficient to provide dedicated HE preamble information for one or more receivers, followed by one or more padding bits to align with the last symbol boundary 895. In other examples, the third CB size 892 or fourth CB size 894 may not be sufficient to provide dedicated HE preamble information for any receivers, and may include padding bits to align with the last symbol boundary 895. In further examples, similarly as discussed above, if the fourth CB size 894 is not sufficient to provide dedicated HE preamble information, the CB may be combined with an adjacent CB to make a larger size CB and reduce the number of CBs that the receiver has to decode. In some examples, CB sizes for different CBs may be mapped to MCS used for transmissions.

The dedicated HE preamble information for one or more receivers may be encoded and transmitted in the primary 20 MHz sub-band 805. As mentioned above, in some examples the first CB size 885 may be selected to provide that common HE preamble information and, optionally, an integer number of users fit into one CB, and thus the common HE preamble information and optional dedicated SIG-B information for a particular receiver does not bleed across code block boundaries, or across 20 MHz boundaries. Likewise, second CB size 890 may be selected to provide that an integer number of users fit into one CB, and thus the dedicated SIG-B information for a particular receiver does not bleed across code block boundaries, or across 20 MHz boundaries. In some examples, each of CB 825 through 884 may be encoded using terminated binary convolutional coding (BCC) encoding for each block *(e.g.,* each of CB 825 through 884 has a CRC and tail). In other examples, tail biting encoding may be used. Techniques of FIG. 8 for transmitting a HE preamble portion 800 may allow for full load balancing of the HE preamble portion 800, through selection of CBs for transmission of preamble information. A receiver receiving such a HE preamble portion 800 may have a capability to receive up to four block sizes.

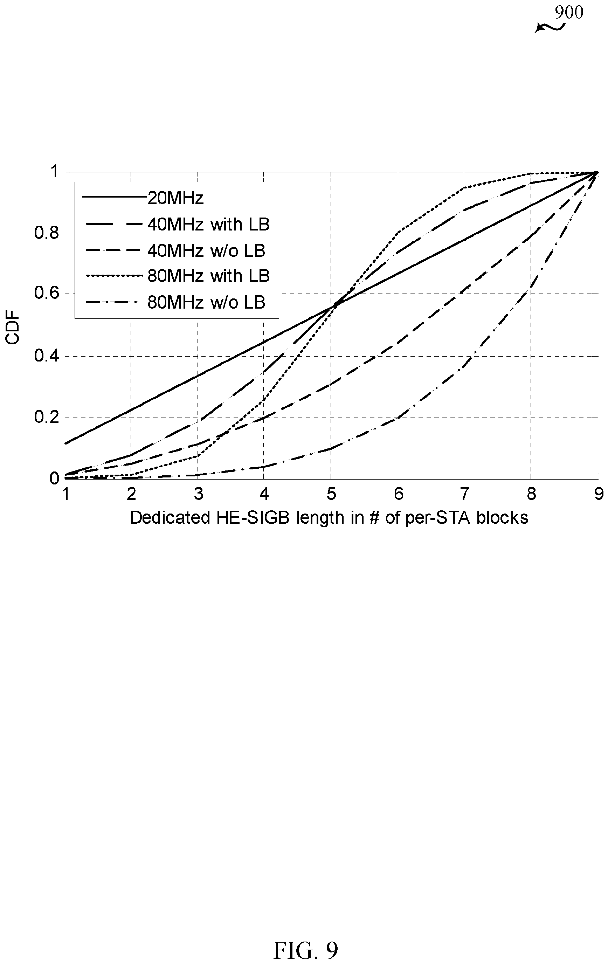

As discussed above, various of the techniques described may provide for load balancing. **FIG. 9** illustrates a graph 900 of a cumulative distribution function (CDF) in relation to preamble portion length for different transmission bandwidths with and without load balancing in accordance with various aspects of the present disclosure. The graph 900 illustrates the load balancing gain that may be achieved according to some examples. In this example, it is assumed that in each 20 MHz sub-band the number of receivers for OFDMA/MU transmissions is uniformly distributed between 1 to 9. Load balancing gain may be even larger in examples where the distribution is more bipolar, namely a higher probability of either small (1/2/3) or large (7/8/9) number of receivers in a 20 MHz sub-band.

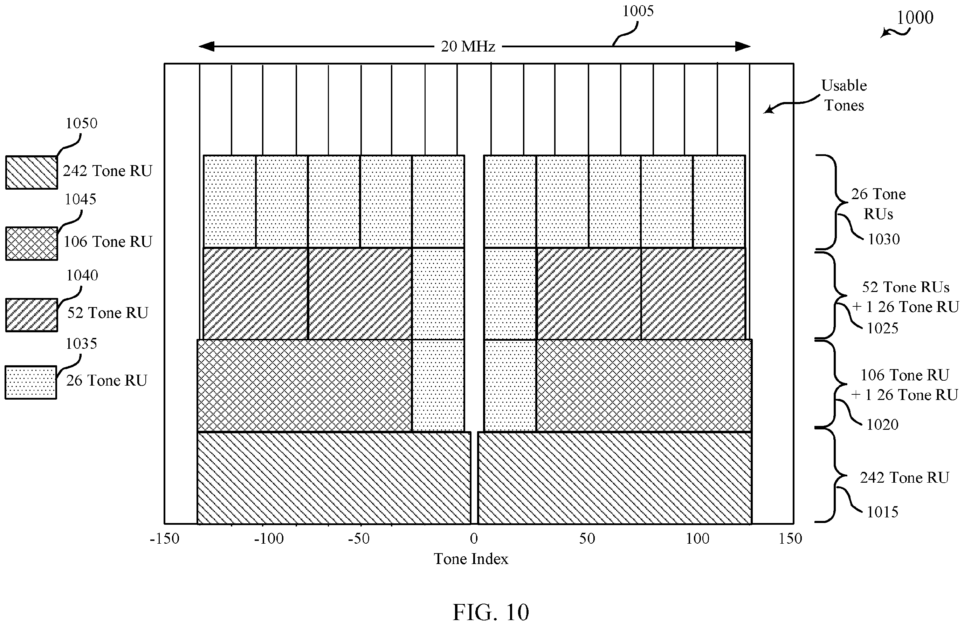

**FIG. 10** shows exemplary RU configurations 1000 for different sub-bands of a preamble portion, in accordance with various aspects of the present disclosure. In the example of FIG. 10, a tone index across a sub-band bandwidth 1005 is illustrated for 20 MHz sub-bands 1015 through 1030. In this example, a first 20 MHz sub-band 1015 may have a 242 tone RU 1050 resource allocation, and a second 20 MHz sub-band 1020 may have resource allocations of 106 tone RUs 1045 and 26 tone RUs 1035. Third 20 MHz sub-band 1025 may have resource allocations of 152 tone RUs 1040 and 26 tone RUs 1035. Fourth 20 MHz sub-band 1030 may have resource allocations of 26 tone RUs 1035. These particular resource allocations are exemplary, and for purposes of illustration and discussion. Numerous different resource allocations may be configured in various examples. In order to signal resource allocations for each 20 MHz sub-band, various aspects of the disclosure may provide that, once HE preamble resource allocations are identified for a number plurality of receivers, and an indication of the HE preamble resource allocations and data portion resource allocations may be transmitted in common HE preamble information. According to some examples, for each 20 MHz sub-band, two quantities are provided, namely a first number of bits to convey the split of the particular 20 MHz sub-band into RUs for the packet to be transmitted (*e*.*g*., 106, 26, 52, 52 RU allocations), and a second number of bits to indicate the number of receivers in each RU that can support MU-MIMO. For example, if MU-MIMO is only supported for RU sizes of 106 tones or greater, then the resource allocation information may convey the number of MU-MIMO users for all possible such RU locations in that 20 MHz sub-band (e.g. three bits each to convey the number of users (1 to 8) in an RU location which can support MU-MIMO). Thus, an explicit field may be used to convey a number of users for RU locations, which may avoid the use of a relatively large table that may otherwise be employed to convey resource allocation information. For example, in the example of FIG. 10, second 20 MHz sub-band 1020 may include 106 tone RUs 1045 and 26 tone RUs 1035. The resource allocation signaling for this example may thus provide an indication of the split of the RUs, which may be determined by an established two-bit indication for example, and a number of spatially multiplexed users for the 106 tone RUs 1045, which may be determined by a three-bit indication, for example. In some examples, the number of spatially multiplexed receivers is signaled for the RU sizes above a predetermined threshold RU size that can support spatial multiplexing across multiple receivers *(e.g.,* 106 tone RUs or greater). In some examples, RU mapping information may be provided that includes a number of bits that indicate a number and size of RU allocations in the transmission for one or more sub-band of the set of sub-bands. In some further examples, multiple users may be allocated to an RU even if they are not configured for MU-MIMO. For example a message sent in an RU could be multicast or broadcast which would reach a number of users, and RU resource allocation signaling may allow for such scenarios. Additionally, in further examples, there may be no restriction in the size of the RU that may be allocated to multiple users (*e*.*g*., RUs less than 106 tones may be allocated to multiple users), and a number of bits used to signal the number of users for the allocations may be increased accordingly.

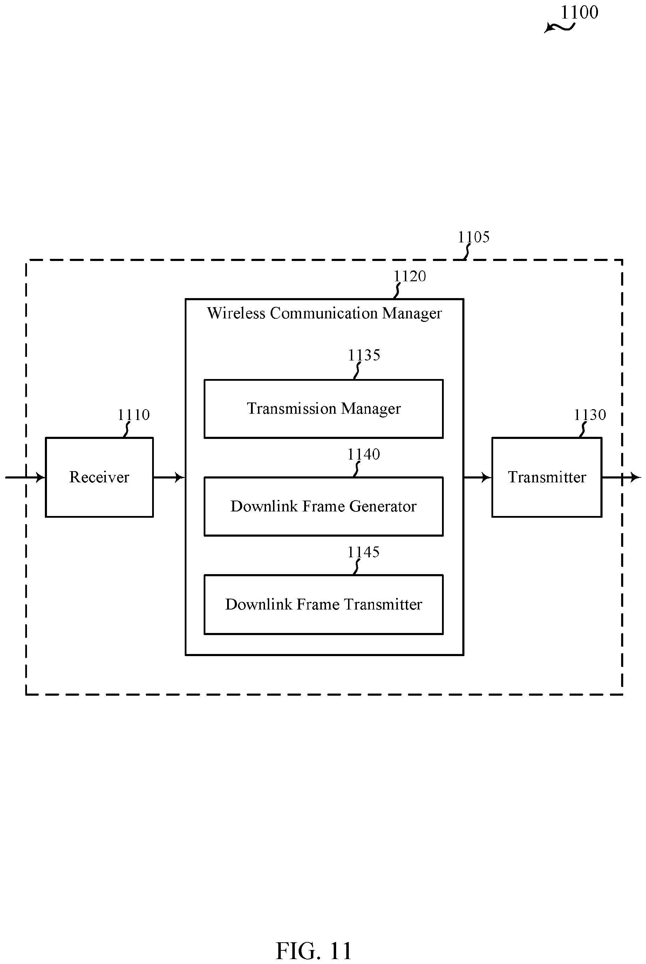

**FIG. 11** shows a block diagram 1100 of an apparatus 1105 for use in wireless communication, in accordance with various aspects of the present disclosure. In some examples, the apparatus 1105 may be an example of aspects of the APs 105 described with reference to FIG. 1. The apparatus 1105 may also be or include a processor. The processor may be coupled with memory and execute instructions stored in the memory that enable the processor to perform or facilitate the transmitting and receiving features discussed herein. The apparatus 1105 may include a receiver 1110, a wireless communication manager 1120, and/or a transmitter 1130. Each of these components may be in communication with each other.

The components of the apparatus 1105 may, individually or collectively, be implemented using at least one application-specific integrated circuit (ASIC) adapted to perform some or all of the applicable functions in hardware. Alternatively, the functions may be performed by at least one other processing unit (or core), on at least one integrated circuit. In other examples, other types of integrated circuits may be used (*e*.*g*., Structured/Platform ASICs, Field Programmable Gate Arrays (FPGAs), a System-on-Chip (SoC), and/or other types of Semi-Custom ICs), which may be programmed in any manner known in the art. The functions of each component may also be implemented, in whole or in part, with instructions embodied in a memory, formatted to be executed by at least one general and/or application-specific processor.

In some examples, the receiver 1110 may include at least one radio frequency (RF) receiver. The receiver 1110 and/or RF receiver may be used to receive various types of data and/or control signals (*e*.*g*., various transmissions) over at least one communication link of a wireless communication system, such as at least one communication link of the WLAN 100 described with reference to FIG. 1.

In some examples, the transmitter 1130 may include at least one RF transmitter. The transmitter 1130 or RF transmitter may be used to transmit various types of data and/or control signals (*e*.*g*., various transmissions) over at least one communication link of a wireless communication system, such as at least one communication link of the WLAN 100 described with reference to FIG. 1.

In some examples, the wireless communication manager 1120 may be used to manage at least one aspect of wireless communication for the apparatus 1105. The wireless communication manager 1120-a may include a transmission manager 1135, a downlink frame generator 1140, and/or a downlink frame transmitter 1145. In some examples, part or all of the downlink frame transmitter 1145 may be incorporated into the transmitter 1130.

The transmission manager 1135 may be used to identify a number of stations to receive data from the apparatus 1105. The downlink frame generator 1140 may be used to generate a wireless frame to transmit the data to a number of stations identified by the transmission manager 1135. The wireless frame may include a first WLAN HE preamble portion directed to the identified number of stations. The first WLAN HE preamble portion may include sequential information blocks and signaling such as discussed above with respect to FIGs. 1-10. In some examples, the downlink frame may include aspects of the wireless frame described with reference to FIGs. 2-8. The downlink frame transmitter 1145 may be used to transmit a downlink frame generated by the downlink frame generator 1140 to a number of stations identified by the transmission manager 1135. The downlink frame may be transmitted via the transmitter 1130.

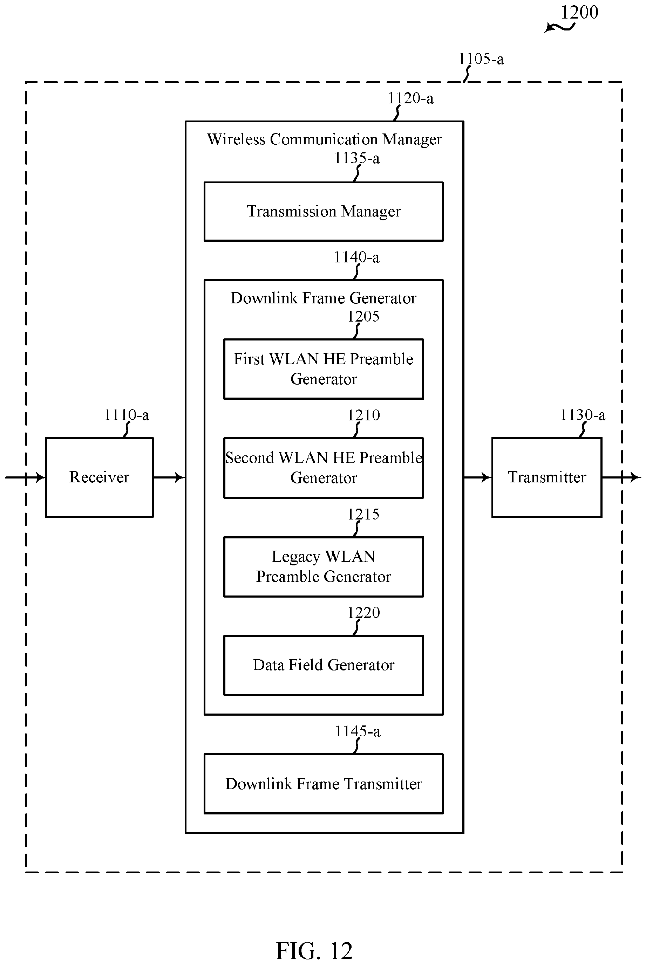

**FIG. 12** shows a diagram 1200 of an apparatus 1105-a for use in wireless communication, in accordance with various aspects of the present disclosure. In some examples, the apparatus 1105-a may be an example of aspects of the APs 105 described with reference to FIG. 1 or apparatus 1105 described with reference to FIG. 11. The apparatus 1105-a may also be or include a processor. The processor may be coupled with memory and execute instructions stored in the memory that enable the processor to perform or facilitate the transmitting and receiving features discussed herein. The apparatus 1105-a may include a receiver 1110-a, a wireless communication manager 1120-a, and/or a transmitter 1130-a. Each of these components may be in communication with each other.

In some examples, the receiver 1110-a, wireless communication manager 1120-a, and transmitter 1130-a may be respective examples of the receiver 1110, wireless communication manager 1120, and transmitter 1130 described with reference to FIG. 11. As shown in FIG. 12, the wireless communication manager 1120-a may include a transmission manager 1135-a, a downlink frame generator 1140-a, and/or a downlink frame transmitter 1145-a. The downlink frame generator 1140-a may include a first WLAN HE preamble generator 1205, a second WLAN HE preamble generator 1210, a legacy WLAN preamble generator 1215, and/or a data field generator 1220. In some examples, part or all of the downlink frame transmitter 1145-a may be incorporated into the transmitter 1130-a.

The downlink frame generator 1140-a may be used to generate a downlink frame to transmit data to a number of stations identified by the transmission manager 1135-a. The downlink frame may include a first WLAN HE preamble portion directed to the identified number of stations, a second WLAN signaling field directed to the identified number of stations, a second WLAN HE preamble portion directed to stations other than the number of stations that are identified to receive data from the access point (and in some cases, to the identified number of stations), a legacy WLAN preamble field, a repeated legacy WLAN signaling field, and/or a data field. The downlink frame may also include an HE-STF and/or HE-LTFs. The first WLAN HE preamble portion may include sequential information blocks and signaling such as discussed above with respect to FIGs. 1-10. In some examples, the downlink frame may include aspects of the downlink frame described with reference to FIGs. 2 through 8.

The first WLAN HE preamble generator 1205 may be used to generate a first WLAN HE preamble portion of a wireless frame, as discussed above with respect to FIGs. 1-10. In some examples, the first WLAN HE preamble generator 1205 may duplicate the first WLAN HE preamble portion, so that the duplicated information can be transmitted subsets of frequency sub-bands of a shared radio frequency spectrum band.

The second WLAN HE preamble generator 1210 may be used to generate a second WLAN HE preamble portion for a downlink frame, such as discussed above with respect to FIGs. 2-3. In some examples, the second WLAN HE preamble portion may signal bandwidth information, which bandwidth information may be used by a station to identify a separately encoded information block in the first WLAN HE preamble portion *(e.g.,* a separately encoded information block that is intended for the station). In some examples, the second WLAN preamble portion may be separately encoded from the first WLAN HE preamble portion.

The legacy WLAN preamble generator 1215 may be used to generate a legacy WLAN preamble field for a downlink frame. In some examples, the legacy WLAN preamble field may include legacy STF information, legacy LTF information, and/or legacy signaling information. The data field generator 1220 may be used to generate a data field for a downlink frame. The data field may include data for each of a number of stations identified by the transmission manager 1135-a.

The downlink frame transmitter 1145-a may be used to transmit a downlink frame generated by the downlink frame generator 1140-a to a number of stations identified by the transmission manager 1135-a. The downlink frame may be transmitted via the transmitter 1130-a.

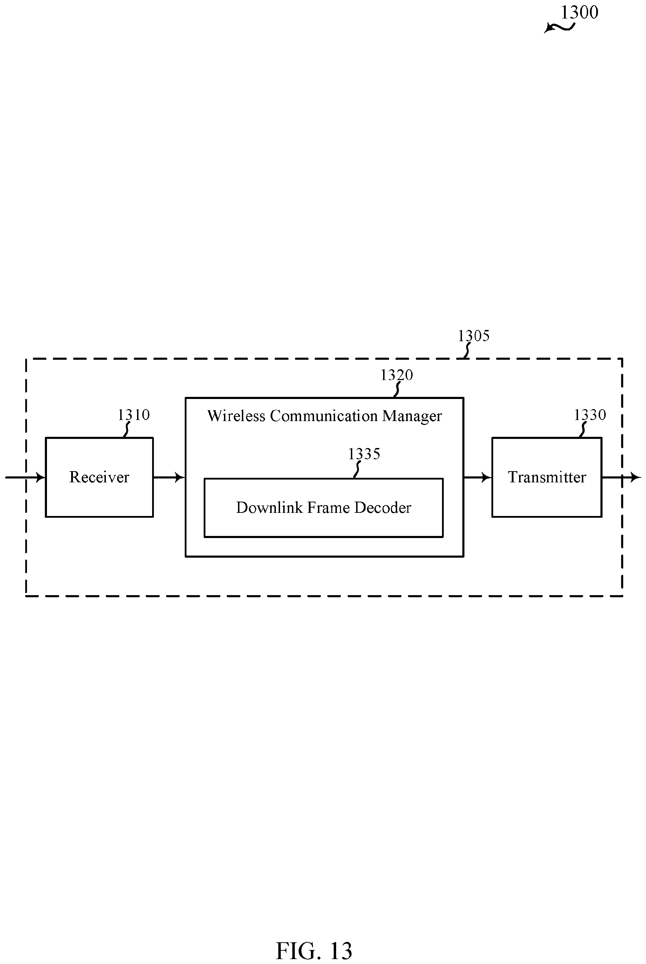

**FIG. 13** shows a diagram 1300 of an apparatus 1305 for use in wireless communication, in accordance with various aspects of the present disclosure. In some examples, the apparatus 1305 may be an example of aspects of the stations 115 described with reference to FIG. 1. The apparatus 1305 may also be or include a processor. The processor may be coupled with memory and execute instructions stored in the memory that enable the processor to perform or facilitate the transmitting and receiving features discussed herein. The apparatus 1305 may include a receiver 1310, a station wireless communication manager 1320, and/or a transmitter 1330. Each of these components may be in communication with each other.

The components of the apparatus 1305 may, individually or collectively, be implemented using at least one ASIC adapted to perform some or all of the applicable functions in hardware. Alternatively, the functions may be performed by at least one other processing unit (or core), on at least one integrated circuit. In other examples, other types of integrated circuits may be used (*e*.*g*., Structured/Platform ASICs, FPGAs, a SoC, and/or other types of Semi-Custom ICs), which may be programmed in any manner known in the art. The functions of each component may also be implemented, in whole or in part, with instructions embodied in a memory, formatted to be executed by at least one general and/or application-specific processor.

In some examples, the receiver 1310 may include at least one RF receiver. The receiver 1310 and/or RF receiver may be used to receive various types of data and/or control signals (*e*.*g*., various transmissions) over at least one communication link of a wireless communication system, such as at least one communication link of the WLAN 100 described with reference to FIG. 1.

In some examples, the transmitter 1330 may include at least one RF transmitter. The transmitter 1330 or RF transmitter may be used to transmit various types of data and/or control signals (*e*.*g*., various transmissions) over at least one communication link of a wireless communication system, such as at least one communication link of the WLAN 100 described with reference to FIG. 1.

In some examples, the station wireless communication manager 1320 may be used to manage at least one aspect of wireless communication for the apparatus 1305. The station wireless communication manager 1320 may include a downlink frame decoder 1335. In some examples, part or all of the downlink frame decoder 1335 may be incorporated into the receiver 1310.

The downlink frame decoder 1335 may be used to receive a downlink frame in a shared radio frequency spectrum band. The downlink frame may include at least a first WLAN HE preamble portion. The first WLAN HE preamble portion may include code blocks and signaling such as discussed above with respect to FIGs. 1-10. The downlink frame decoder 1335 may be used to decode a separately encoded information blocks for the station using information received in the first WLAN HE preamble portion, as discussed above with respect to FIGs. 1-10.

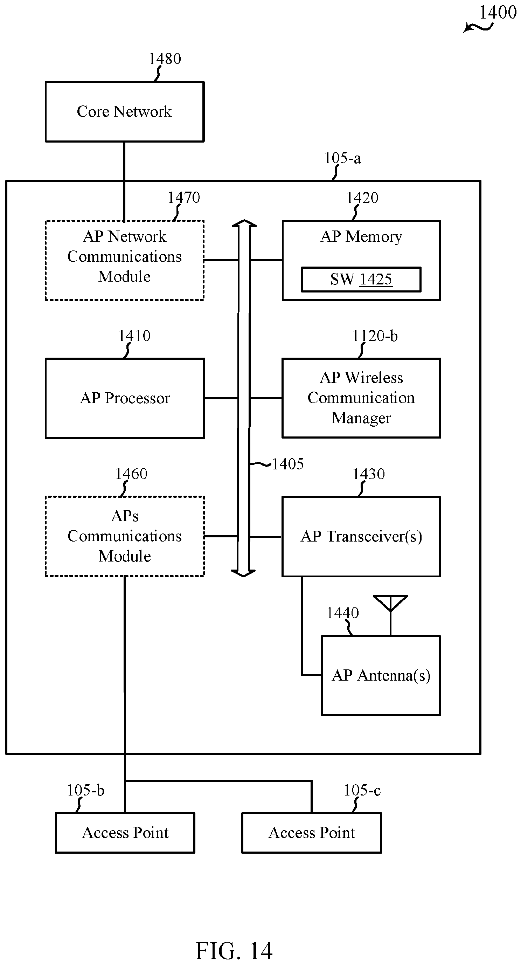

Turning to **FIG. 14****,** a diagram 1400 is shown that illustrates an AP 105-a for use in wireless communication, in accordance with various aspects of the present disclosure . AP 105-a may send and receive WLAN frames conforming to an IEEE 802.11 standard, including WLAN frames described above with respect to FIGs. 2-8, as well as encode and decode such frames. In some aspects, the AP 105-a may be an example of the APs 105 or apparatuses 1105 of FIGs. 1, 11, and 12. The AP 105-a may include an AP processor 1410, an AP memory 1420, one or more AP transceivers 1430, and/or one or more AP antennas 1440, and/or an AP wireless communication manager 1120-b. The AP wireless communication manager 1120-b may be an example of the AP wireless communication manager (or wireless communication manager) of FIGs. 1, 11, and 12. In some examples, the AP 105-a may also include one or both of an APs communications module 1460 and a network communications module 1470. Each of these modules may be in communication with each other, directly or indirectly, over at least one bus 1405.

The AP memory 1420 may include random access memory (RAM) and/or read-only memory (ROM). The memory 1420 may also store computer-readable, computer-executable software (SW) code 1425 containing instructions that may be configured to, when executed, cause the AP processor 1410 to perform various functions described herein for wireless communication, including generation and/or transmission of a wireless frame as discussed above with respect to FIGs. 1-10. Alternatively, the software code 1425 may not be directly executable by the AP processor 1410 but be configured to cause the AP 105-a, *e*.*g*., when compiled and executed, to perform functions described herein.

The AP processor 1410 may include an intelligent hardware device, *e.g.,* a central processing unit (CPU), a microcontroller, an ASIC, *etc.* The AP processor 1410 may process information received through the AP transceivers 1430, the APs communications module 1460, and/or the network communications module 1470. The AP processor 1410 may also process information to be sent to the AP transceiver(s) 1430 for transmission through the AP antennas 1440, to the APs communications module 1460, and/or to the network communications module 1470. The AP processor 1410 may handle, alone or in connection with the AP wireless communication manager 1120-b, various aspects related to generating and/or transmitting a wireless frame as discussed herein.

The AP transceivers 1430 may include a modem configured to modulate the packets and provide the modulated packets to the AP antennas 1440 for transmission, and to demodulate packets received from the AP antennas 1440. The AP transceivers 1430 may be implemented as at least one transmitter and at least one separate receiver. The AP transceivers 1430 may be configured to communicate bi-directionally, via the AP antennas 1440, with at least one station 115, as illustrated in FIG. 1, for example. The AP 105-a may typically include multiple AP antennas 1440 *(e.g.,* an antenna array). The AP 105-a may communicate with a core network 1480 through the AP network communications module 1470. The AP 105-a may communicate with other APs, such as the AP 105-b and/or the AP 105-c, using an APs communications module 1460.

The AP wireless communication manager 1120-b may manage communications with stations and/or other devices as illustrated in the WLAN 100 of FIG. 1. The AP wireless communication manager 1120-b may be a component of the AP 105-a in communication with some or all of the other components of the AP 105-a over the at least one bus 1405. Alternatively, functionality of the AP wireless communication manager 1120-b may be implemented as a component of the AP transceivers 1430, as a computer program product, and/or as at least one controller element of the AP processor 1410.

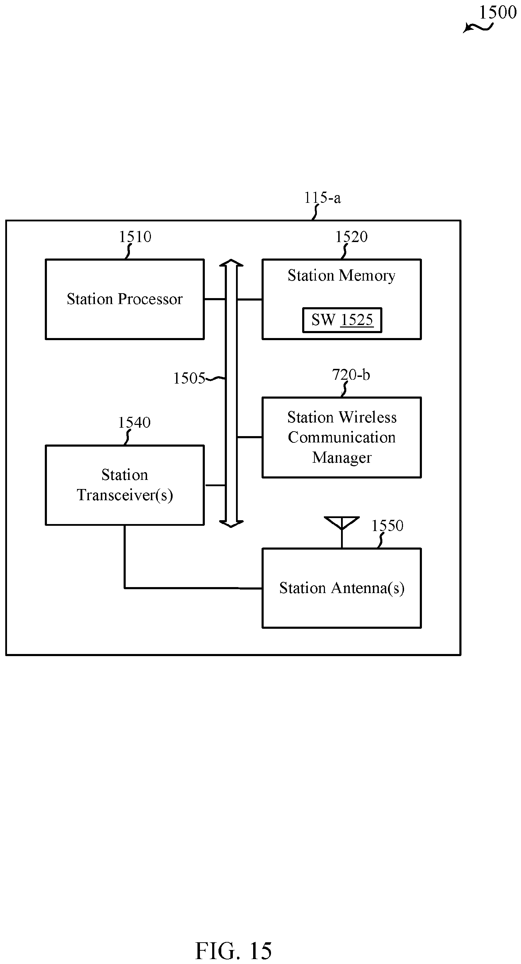

The components of the AP 105-a may be configured to implement aspects discussed above with respect FIGs. 1-10, and those aspects may not be repeated here for the sake of brevity. Moreover, the components of the AP 105-a may be configured to implement aspects discussed below with respect to FIGs. 15-20, and those aspects may not be repeated here also for the sake of brevity.

Turning to **FIG. 15****,** a diagram 1500 is shown that illustrates a station 115-a for use in wireless communication, in accordance with various aspects of the present disclosure. Station 115-a may send and receive WLAN frames conforming to an IEEE 802.11 standard, including WLAN frames described above with respect to FIGs. 2-8, as well as encode and decode such frames. The station 115-a may have various other configurations and may be included or be part of a personal computer (*e*.*g*., laptop computer, netbook computer, tablet computer, *etc.*), a cellular telephone, a PDA, a digital video recorder (DVR), an internet appliance, a gaming console, an e-readers, *etc.* The station 115-a may have an internal power supply, such as a small battery, to facilitate mobile operation. The station 115-a may be an example of the stations 115 or apparatuses 1305 of FIGs. 1 and 13.

The station 115-a may include a station processor 1510, a station memory 1520, one or more station transceivers 1540, one or more station antennas 1550, and/or a station wireless communication manager 1320-a. The station wireless communication manager 1320-a may be an example of the station wireless communication manager 1320 of FIGs. 1 and 13. Each of these modules may be in communication with each other, directly or indirectly, over at least one bus 1505.

The station memory 1520 may include RAM and/or ROM. The station memory 1520 may store computer-readable, computer-executable SW code 1525 containing instructions that may be configured to, when executed, cause the station processor 1510 to perform various functions described herein for wireless communication, including reception of a downlink frame and/or generation and/or transmission of an uplink frame. Alternatively, the computer-executable SW code 1525 may not be directly executable by the station processor 1510 but be configured to cause the station 115-a *(e.g.,* when compiled and executed) to perform functions described herein.

The station processor 1510 may include an intelligent hardware device, *e.g.,* a CPU, a microcontroller, an ASIC, *etc.* The station processor 1510 may process information received through the station transceivers 1540 and/or to be sent to the station transceivers 1540 for transmission through the one or more station antennas 1550. The station processor 1510 may handle, alone or in connection with the station wireless communication manager 1320-a, various aspects related to receiving a downlink frame and/or generating and/or transmitting an uplink frame.

The station transceivers 1540 may be configured to communicate bi-directionally, via the station antennas 1550, with at least one AP 105, as illustrated in FIG. 1, for example. The station transceivers 1540 may be implemented as at least one transmitter and at least one separate receiver. The station transceivers 1540 may include a modem configured to modulate the packets and provide the modulated packets to the one or more station antennas 1550 for transmission, and to demodulate packets received from the station antennas 1550. While the station 115-a may include a single antenna, there may be aspects in which the station 115-a may include multiple or station antennas 1550.

The station wireless communication manager 1320-a may manage communications with APs and/or other devices as illustrated in the WLAN 100 of FIG. 1. The station wireless communication manager 1320-a may be a component of the station 115-a in communication with some or all of the other components of the station 115-a over the at least one bus 1505. Alternatively, functionality of the station wireless communication manager 1320-a may be implemented as a component of the station transceivers 1540, as a computer program product, and/or as at least one controller element of the station processor 1510.

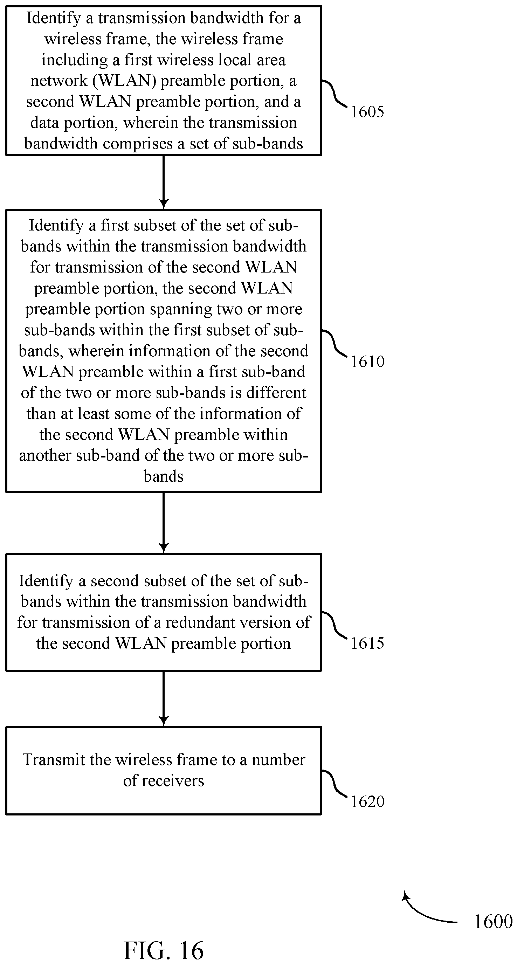

The components of the station 115-a may be configured to implement aspects discussed above with respect to FIGs. 1-13, and those aspects may not be repeated here for the sake of brevity. Moreover, the components of the station 115-a may be configured to implement aspects discussed below with respect to FIGs. 16-20, and those aspects may not be repeated here also for the sake of brevity.

**FIG. 16** shows a flowchart illustrating a method 1600 for techniques for transmitting/receiving wireless local area network information in accordance with various aspects of the present disclosure. The operations of method 1600 may be implemented by an AP 105 or its components as described with reference to FIGs. 1-15. For example, the operations of method 1600 may be performed by the wireless communication manager 1120 as described with reference to FIGs. 11-14. In some examples, a AP 105 or apparatus 1105 may execute a set of codes to control the functional elements of the AP 105 or apparatus 1105 to perform the functions described below. Additionally or alternatively, the AP 105 or apparatus 1105 may perform aspects the functions described below using special-purpose hardware.

At block 1605, the AP 105 or apparatus 1105 may Identify a transmission bandwidth for a wireless frame, the wireless frame including a first wireless local area network WLAN preamble portion, a second WLAN preamble portion, and a data portion, wherein the transmission bandwidth comprises a set of sub-bands as described with reference to FIGs. 2-10. In some examples, the operations of block 1605 may be performed by the transmission manager 1135 as described with reference to FIGs. 11-12.

At block 1610, the AP 105 or apparatus 1105 may identify a first subset of the set of sub-bands within the transmission bandwidth for transmission of the second WLAN preamble portion, the second WLAN preamble portion spanning two or more sub-bands within the first subset of sub-bands, wherein information of the second WLAN preamble within a first sub-band of the two or more sub-bands is different than at least some of the information of the second WLAN preamble within another sub-band of the two or more sub-bands as described with reference to FIGs. 2-10. In some examples, the operations of block 1610 may be performed by the downlink frame generator 1140 as described with reference to FIGs. 11-12.

At block 1615, the AP 105 or apparatus 1105 may identify a second subset of the set of sub-bands within the transmission bandwidth for transmission of a redundant version of the second WLAN preamble portion as described with reference to FIGs. 2-10. In some examples, the operations of block 1615 may be performed by the downlink frame generator 1140 as described with reference to FIGs. 11-12.

At block 1620, the AP 105 or apparatus 1105 may transmit the wireless frame to a number of receivers as described with reference to FIGs. 2-10. In some examples, the operations of block 1620 may be performed by the downlink frame transmitter 1145 as described with reference to FIGs. 11-12.

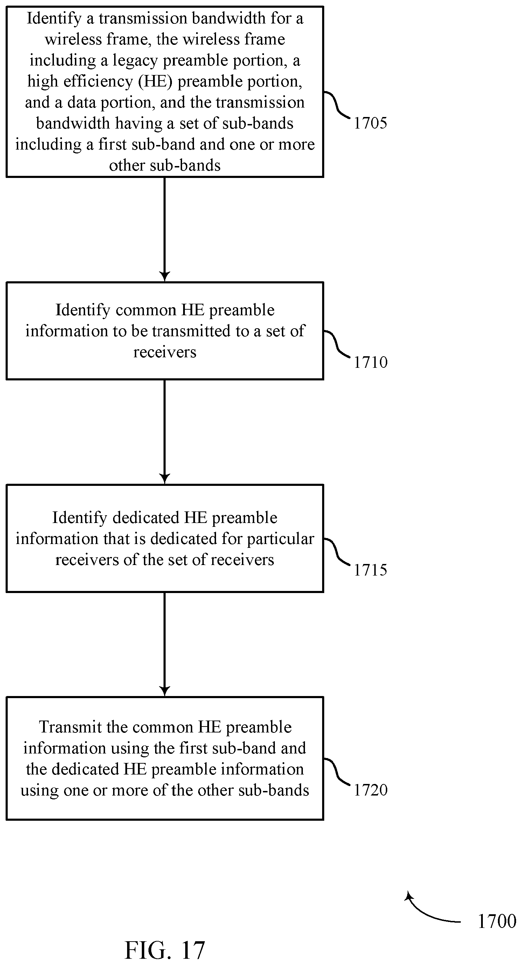

**FIG. 17** shows a flowchart illustrating a method 1700 for techniques for transmitting/receiving wireless local area network information in accordance with various aspects of the present disclosure. The operations of method 1700 may be implemented by a AP 105 or apparatus 1105 or its components as described with reference to FIGs. 1-15. For example, the operations of method 1700 may be performed by the wireless communication manager 1120 as described with reference to FIGs. 11-14. In some examples, a AP 105 or apparatus 1105 may execute a set of codes to control the functional elements of the AP 105 or apparatus 1105 to perform the functions described below. Additionally or alternatively, the AP 105 or apparatus 1105 may perform aspects the functions described below using special-purpose hardware. The method 1700 may also incorporate aspects of method 1600 of FIG. 16.

At block 1705, the AP 105 or apparatus 1105 may identify a transmission bandwidth for a wireless frame, the wireless frame including a legacy preamble portion, a HE preamble portion, and a data portion, and the transmission bandwidth having a set of sub-bands including a first sub-band and one or more other sub-bands as described with reference to FIGs. 2-10. In some examples, the operations of block 1705 may be performed by the transmission manager 1135 as described with reference to FIGs. 11-12.

At block 1710, the AP 105 or apparatus 1105 may identify common HE preamble information to be transmitted to a plurality of receivers as described with reference to FIGs. 2-10. In some examples, the operations of block 1710 may be performed by the downlink frame generator 1140 as described with reference to FIGs. 11-12.

At block 1715, the AP 105 or apparatus 1105 may identify dedicated HE preamble information that is dedicated for particular receivers of the plurality of receivers as described with reference to FIGs. 2-10. In some examples, the operations of block 1715 may be performed by the downlink frame generator 1140 as described with reference to FIGs. 11-12.

At block 1720, the AP 105 or apparatus 1105 may transmit the common HE preamble information using the first sub-band and the dedicated HE preamble information using one or more of the other sub-bands as described with reference to FIGs. 2-10. In some examples, the operations of block 1720 may be performed by the downlink frame transmitter 1145 as described with reference to FIGs. 11-12.

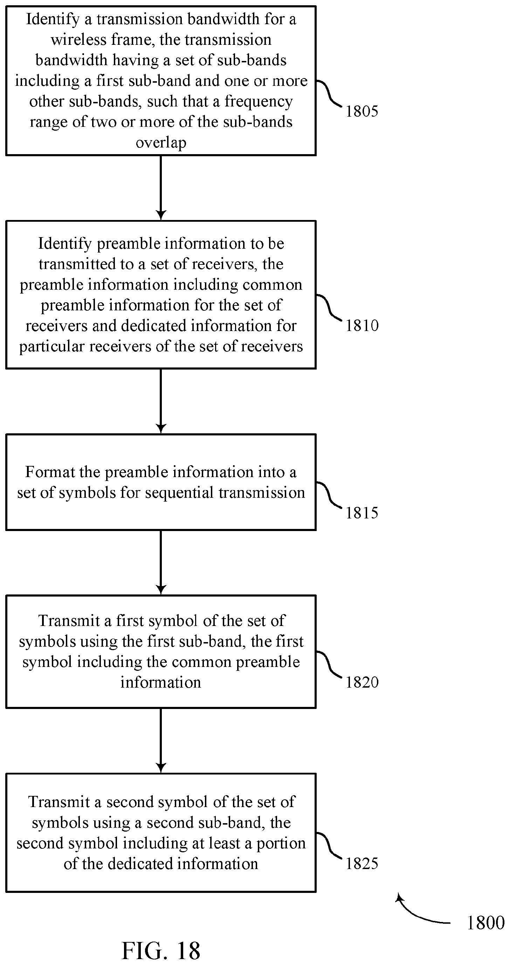

**FIG. 18** shows a flowchart illustrating a method 1800 for techniques for transmitting/receiving wireless local area network information in accordance with various aspects of the present disclosure. The operations of method 1800 may be implemented by a AP 105 or apparatus 1105 or its components as described with reference to FIGs. 1-15. For example, the operations of method 1800 may be performed by the wireless communication manager 1120 as described with reference to FIGs. 11-14. In some examples, a AP 105 or apparatus 1105 may execute a set of codes to control the functional elements of the AP 105 or apparatus 1105 to perform the functions described below. Additionally or alternatively, the AP 105 or apparatus 1105 may perform aspects the functions described below using special-purpose hardware. The method 1800 may also incorporate aspects of methods 1600, and 1700 of FIGs. 16-17.

At block 1805, the AP 105 or apparatus 1105 may identify a transmission bandwidth for a wireless frame, the transmission bandwidth having a set of sub-bands including a first sub-band and one or more other sub-bands, wherein a frequency range of two or more of the sub-bands overlap as described with reference to FIGs. 2-10. In some examples, the operations of block 1805 may be performed by the transmission manager 1135 as described with reference to FIGs. 11-12.

At block 1810, the AP 105 or apparatus 1105 may identify preamble information to be transmitted to a plurality of receivers, the preamble information including common preamble information for the plurality of receivers and dedicated information for particular receivers of the plurality of receivers as described with reference to FIGs. 2-10. In some examples, the operations of block 1810 may be performed by the downlink frame generator 1140 as described with reference to FIGs. 11-12.

At block 1815, the AP 105 or apparatus 1105 may format the preamble information into a plurality of symbols for sequential transmission as described with reference to FIGs. 2-10. In some examples, the operations of block 1815 may be performed by the downlink frame generator 1140 as described with reference to FIGs. 11-12.

At block 1820, the AP 105 or apparatus 1105 may transmit a first symbol of the plurality of symbols using the first sub-band, the first symbol including the common preamble information as described with reference to FIGs. 2-10. In some examples, the operations of block 1820 may be performed by the downlink frame transmitter 1145 as described with reference to FIGs. 11-12.

At block 1825, the AP 105 or apparatus 1105 may transmit a second symbol of the plurality of symbols using a second sub-band, the second symbol including at least a portion of the dedicated information as described with reference to FIGs. 2-10. In some examples, the operations of block 1825 may be performed by the downlink frame transmitter 1145 as described with reference to FIGs. 11-12.

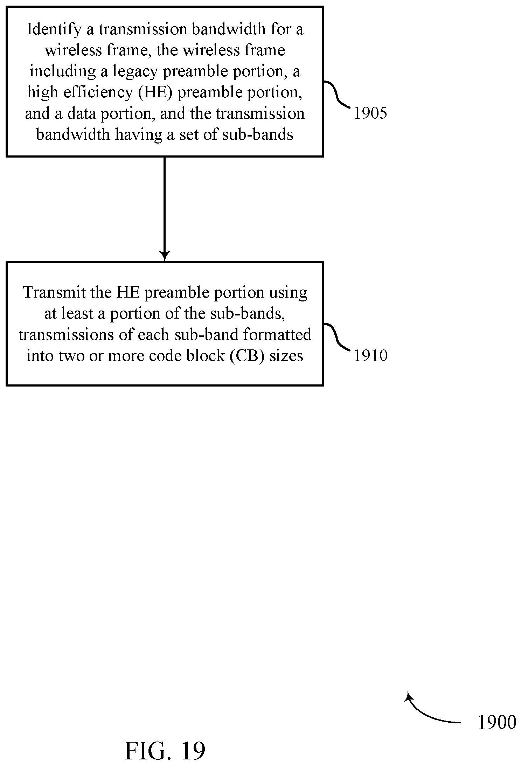

**FIG. 19** shows a flowchart illustrating a method 1900 for techniques for transmitting/receiving wireless local area network information in accordance with various aspects of the present disclosure. The operations of method 1900 may be implemented by a AP 105 or apparatus 1105 or its components as described with reference to FIGs. 1-15. For example, the operations of method 1900 may be performed by the wireless communication manager 1120 as described with reference to FIGs. 11-14. In some examples, a AP 105 or apparatus 1105 may execute a set of codes to control the functional elements of the AP 105 or apparatus 1105 to perform the functions described below. Additionally or alternatively, the AP 105 or apparatus 1105 may perform aspects the functions described below using special-purpose hardware. The method 1900 may also incorporate aspects of methods 1600, 1700, and 1800 of FIGs. 16-18.

At block 1905, the AP 105 or apparatus 1105 may identify a transmission bandwidth for a wireless frame, the wireless frame including a legacy preamble portion, a HE preamble portion, and a data portion, and the transmission bandwidth having a set of sub-bands as described with reference to FIGs. 2-10. In some examples, the operations of block 1905 may be performed by the transmission manager 1135 as described with reference to FIGs. 11-12.

At block 1910, the AP 105 or apparatus 1105 may transmit the HE preamble portion using at least a portion of the sub-bands, transmissions of each sub-band formatted into two or more CB sizes as described with reference to FIGs. 2-10. In some examples, the operations of block 1910 may be performed by the downlink frame transmitter 1145 as described with reference to FIGs. 11-12.

**FIG. 20** shows a flowchart illustrating a method 2000 for techniques for transmitting/receiving wireless local area network information in accordance with various aspects of the present disclosure. The operations of method 2000 may be implemented by a AP 105 or apparatus 1105 or its components as described with reference to FIGs. 1-15. For example, the operations of method 2000 may be performed by the wireless communication manager 1120 as described with reference to FIGs. 11-14. In some examples, a AP 105 or apparatus 1105 may execute a set of codes to control the functional elements of the AP 105 or apparatus 1105 to perform the functions described below. Additionally or alternatively, the AP 105 or apparatus 1105 may perform aspects the functions described below using special-purpose hardware. The method 2000 may also incorporate aspects of methods 1600, 1700, 1800, and 1900 of FIGs. 16-19.

At block 2005, the AP 105 or apparatus 1105 may identify a transmission bandwidth for a wireless frame, the wireless frame including a first wireless local area network (WLAN) preamble portion, a second WLAN preamble portion, and a data portion, and the transmission bandwidth having a set of sub-bands as described with reference to FIGs. 2-10. In some examples, the operations of block 2005 may be performed by the transmission manager 1135 as described with reference to FIGs. 11-12.

At block 2010, the AP 105 or apparatus 1105 may identify preamble information to be transmitted to a plurality of receivers, the preamble information including common preamble information for the plurality of receivers and dedicated information for particular receivers of the plurality of receivers as described with reference to FIGs. 2-10. In some examples, the operations of block 2010 may be performed by the downlink frame generator 1140 as described with reference to FIGs. 11-12.

At block 2015, the AP 105 or apparatus 1105 may determine second WLAN preamble portion resource allocations for the plurality of receivers to receive the dedicated information and data portion resource allocations for the plurality of receivers to receive data as described with reference to FIGs. 2-10. In some examples, the operations of block 2015 may be performed by the downlink frame generator 1140 as described with reference to FIGs. 11-12.

At block 2020, the AP 105 or apparatus 1105 may transmit an indication of the second WLAN preamble portion resource allocations and data portion resource allocations in the common preamble information as described with reference to FIGs. 2-10. In some examples, the operations of block 2020 may be performed by the downlink frame transmitter 1145 as described with reference to FIGs. 11-12.

Thus, methods 1600, 1700, 1800, 1900, and 2000 may provide for techniques for transmitting/receiving wireless local area network information. It should be noted that methods 1600, 1700, 1800, 1900, and 2000 describe possible implementation, and that the operations and the steps may be rearranged or otherwise modified such that other implementations are possible. In some examples, aspects from two or more of the methods 1600, 1700, 1800, 1900, and 2000 may be combined.

The detailed description set forth above in connection with the appended drawings describes examples and does not represent all of the examples that may be implemented or that are within the scope of the claims. The terms "example" and "exemplary," when used in this description, mean "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, multiple microprocessors, at least one microprocessor in conjunction with a DSP core, or any other such configuration.

The functions described herein may be implemented in hardware, software executed by a processor, firmware, or any combination thereof. If implemented in software executed by a processor, the functions may be stored on or transmitted as instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of' or "one or more of') indicates an inclusive list such that, for example, a phrase referring to "at least one of' a list of items refers to any combination of those items, including single members. As an example, "at least one of: A, B, or C" is intended to cover A, B, C, A-B, A-C, B-C, and A-B-C, as well as any combination with multiples of the same element *(e.g.,* A-A A-A-A, A-A-B, A-A-C, A-B-B, A-C-C, B-B, B-B-B, B-B-C, C-C, and C-C-C or any other ordering of A, B, and C).

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, EEPROM, flash memory, CD-ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

## Claims

1. A method for wireless communication by a wireless device, comprising:
identifying (2005) a transmission bandwidth for a wireless frame (200, 200-a), the wireless frame (200, 200-a) including a first wireless local area network, WLAN, preamble portion (205, 215, 215-a), a second WLAN preamble portion (220), and a data portion (235, 235-a), and the transmission bandwidth having a set of sub-bands, wherein the first WLAN preamble portion (205, 215, 215-a) comprises a legacy preamble portion (205) and the second WLAN preamble portion (220) comprises a high efficiency, HE, preamble portion;
identifying (2010) preamble information to be transmitted to a plurality of receivers, the preamble information including common HE preamble information for the plurality of receivers and dedicated information for particular receivers of the plurality of receivers and the preamble information comprising a first number of bits to convey a split of the set of sub-bands into resource units, RUs, and a second number of bits to indicate a number of receivers in each RU that can support multi-user, MU, multiple-input-multiple-output, MIMO;
determining (2015) a RU allocation for the plurality of receivers to receive the dedicated information and data; and
transmitting (2020), in the common HE preamble information of the second WLAN preamble portion (220), an indication of the RU allocation, the RU allocation conveying a number of receivers in each RU of the determined RU allocation.

2. The method of claim 1, wherein the indication comprises RU mapping information and a number of spatially multiplexed receivers to receive data in one or more of the RUs.

3. The method of claim 2, wherein the number of spatially multiplexed receivers is only signaled for RU sizes that can support spatial multiplexing across multiple receivers.

4. The method of claim 2, wherein support for spatial multiplexing across multiple receivers is allowed for RU sizes greater than or equal to a threshold RU size value.

5. The method of claim 2, wherein the RU mapping information comprises a number of bits that indicate a number and size of RU allocations in the transmission for one or more sub-bands of the set of sub-bands.

6. The method of claim 2, wherein the RU allocation conveys a number of active receivers in each RU allocated in one or more sub-bands of the set of sub-bands.

7. The method of claim 2, wherein the number of spatially multiplexed receivers indicates a number of receivers multiplexed using a MU-MIMO mode of transmission.

8. The method of claim 2, wherein the wireless device is a wireless communication terminal and further comprises an antenna and a transceiver.

9. An apparatus for wireless communication, comprising:
means for identifying a transmission bandwidth for a wireless frame (200, 200-a), the wireless frame (200, 200-a) including a first wireless local area network, WLAN, preamble portion (205, 215, 215-a), a second WLAN preamble portion (220), and a data portion (235, 235-a), and the transmission bandwidth having a set of sub-bands, wherein the first WLAN preamble portion (205, 215, 215-a) comprises a legacy preamble portion (205) and the second WLAN preamble portion (220) comprises a high efficiency, HE, preamble portion;
means for identifying preamble information to be transmitted to a plurality of receivers, the preamble information including common HE preamble information for the plurality of receivers and dedicated information for particular receivers of the plurality of receivers and the preamble information comprising a first number of bits to convey a split of the set of sub-bands into resource units, RUs, and a second number of bits to indicate a number of receivers in each RU that can support multi-user, MU, multiple-input-multiple-output, MIMO;
means for determining a RU allocation for the plurality of receivers to receive the dedicated information and data; and
means for transmitting, in the common HE preamble information of the second WLAN preamble portion (220), an indication of the RU allocation, the RU allocation conveying a number of receivers in each RU of the determined RU allocation.

10. The apparatus of claim 9, wherein the indication comprises RU mapping information and a number of spatially multiplexed receivers to receive data in one or more of the RUs.

11. A computer-readable medium storing code for wireless communication, the code comprising instructions executable to perform a method according to any of claims 1 to 8.

## Patentansprüche

1. Ein Verfahren für drahtlose Kommunikation durch ein drahtloses Gerät, aufweisend:
Identifizieren (2005) einer Übertragungsbandbreite für einen drahtlosen Rahmen (200, 200-a), wobei der drahtlose Rahmen (200, 200-a) umfasst einen ersten drahtloses lokales Netzwerk, WLAN, Präambelabschnitt (205, 215, 215-a), einen zweiten WLAN-Präambelabschnitt (220), und einen Datenabschnitt (235, 235-a), und wobei die Übertragungsbandbreite einen Satz von Unterbändern besitzt, wobei der erste WLAN Präambelabschnitt (205, 215, 215-a) aufweist einen Legacy-Präambelabschnitt (205) und der zweite WLAN Präambelabschnitt (220) aufweist einen Hocheffizienz-, HE, Präambelabschnitt;
Identifizieren (2010) von Präambelinformation, die übertragen werden soll an eine Vielzahl von Empfänger, wobei die Präambelinformation umfasst gemeinsame HE-Präambelinformation für die Vielzahl von Empfängern und dedizierte Information für bestimmte Empfänger von der Vielzahl von Empfänger und die Präambelinformation aufweist eine erste Zahl von Bits zum Übermitteln einer Aufteilung des Satzes von Unterbändern in Ressourceneinheiten, RUs, und eine zweite Nummer von Bits zum Anzeigen einer Zahl von Empfängern in jeder RU, die Mehrbenutzer, MU, Multiple-Input-Multiple-Output, MIMO, unterstützen können;
Bestimmen (2015) einer RU Zuweisung für die Vielzahl von Empfängern zum Empfangen der dedizierten Information und Daten; und
Übertragen (2020), in der gemeinsamen HE Präambelinformation des zweiten WLAN-Präambelabschnitts (220), einer Indikation der RU-Zuweisung, wobei die RU-Zuweisung eine Zahl von Empfängern in jeder RU der bestimmten RU-Zuweisung vermittelt.

2. Das Verfahren gemäß Anspruch 1, wobei die Indikation aufweist RU Abbildungsinformation und eine Zahl von räumlich gemultiplexten Empfängern zum Empfangen von Daten in einer oder mehreren der RUs.

3. Das Verfahren gemäß Anspruch 2, wobei die Zahl von räumlich gemultiplexten Empfängern nur signalisiert wird für RU Größen, die räumliches Multiplexen über mehrere Empfänger unterstützen können.

4. Das Verfahren gemäß Anspruch 2, wobei Unterstützung von räumlichem Multiplexen über mehrere Empfänger erlaubt ist für RU Größen größer als oder gleich einem Schwellenwert-RU-Größenwert.

5. Das Verfahren gemäß Anspruch 2, wobei die RU Abbildungsinformation aufweist eine Zahl von Bits, die anzeigt eine Zahl und Größe von RU Zuweisungen in der Übertragung für eines oder mehrere Unterbänder des Satzes von Unterbändern.

6. Das Verfahren gemäß Anspruch 2, wobei die RU Zuweisung eine Zahl von aktiven Empfängern in jeder RU, die einem oder mehreren Unterbändern von dem Satz von Unterbändern zugewiesen ist, vermittelt.

7. Das Verfahren gemäß Anspruch 2, wobei die Zahl von räumlich gemultiplexten Empfängern anzeigt eine Zahl von Empfängern, die gemultiplext sind unter Verwendung eines MU-MIMO Übertragungsmodus.

8. Das Verfahren gemäß Anspruch 2, wobei das drahtlose Gerät ein drahtloses Kommunikationsendgerät ist und weiter aufweist eine Antenne und einen Transceiver.

9. Eine Vorrichtung für drahtlose Kommunikation, aufweisend:
Mittel zum Identifizieren einer Übertragungsbandbreite für einen drahtlosen Rahmen (200, 200-a), wobei der drahtlose Rahmen (200, 200-a) umfasst einen ersten drahtloses lokales Netzwerk, WLAN, Präambelabschnitt (205, 215, 215-a), einen zweiten WLAN-Präambelabschnitt (220), und einen Datenabschnitt (235, 235-a), und wobei die Übertragungsbandbreite einen Satz von Unterbändern besitzt, wobei der erste WLAN Präambelabschnitt (205, 215, 215-a) aufweist einen Legacy-Präambelabschnitt (205) und der zweite WLAN Präambelabschnitt (220) aufweist einen Hocheffizienz-, HE, Präambelabschnitt;
Mittel zum Identifizieren von Präambelinformation, die übertragen werden soll an eine Vielzahl von Empfänger, wobei die Präambelinformation umfasst gemeinsame HE-Präambelinformation für die Vielzahl von Empfängern und dedizierte Information für bestimmte Empfänger von der Vielzahl von Empfänger und die Präambelinformation aufweist eine erste Zahl von Bits zum Übermitteln einer Aufteilung des Satzes von Unterbändern in Ressourceneinheiten, RUs, und eine zweite Nummer von Bits zum Anzeigen einer Zahl von Empfängern in jeder RU, die Mehrbenutzer, MU, Multiple-Input-Multiple-Output, MIMO, unterstützen können;
Mittel zum Bestimmen einer RU Zuweisung für die Vielzahl von Empfängern zum Empfangen der dedizierten Information und Daten; und Mittel zum Übertragen, in der gemeinsamen HE Präambelinformation des zweiten WLAN-Präambelabschnitts (220), einer Indikation der RU-Zuweisung, wobei die RU-Zuweisung eine Zahl von Empfängern in jeder RU der bestimmten RU-Zuweisung vermittelt.

10. Die Vorrichtung gemäß Anspruch 9, wobei die Indikation aufweist RU Abbildungsinformation und eine Zahl von räumlich gemultiplexten Empfängern zum Empfangen von Daten in einer oder mehreren von den RUs.

11. Ein computerlesbares Medium speichernd Code für drahtlose Kommunikation, wobei der Code aufweist Instruktionen, die ausführbar sind zum Durchführen eines Verfahrens gemäß einem der Ansprüche 1 bis 8.

## Revendications

1. Un procédé pour une communication sans fil par un dispositif sans fil, comprenant :
l'identification (2005) d'une largeur de bande de transmission pour une trame sans fil (200, 200-a), la trame sans fil (200, 200-a) incluant une première partie de préambule de réseau local sans fil, WLAN, (205, 215, 215-a), une seconde partie de préambule WLAN (220), et une partie de donnée (235, 235-a), et la largeur de bande de transmission ayant un ensemble de sous-bandes, dans lequel la première partie de préambule WLAN (205, 215, 215-a) comprend une partie de préambule héritée (205) et la seconde partie de préambule WLAN (220) comprend une partie de préambule à haute efficacité, HE ;
l'identification (2010) d'une information de préambule à transmettre à une pluralité de récepteurs, l'information de préambule incluant une information de préambule HE commune pour la pluralité de récepteurs et une information dédiée pour des récepteurs particuliers de la pluralité de récepteurs et l'information de préambule comprenant un premier nombre de bits pour acheminer une séparation de l'ensemble de sous-bandes en unités de ressource, RU, et un second nombre de bits pour indiquer un nombre de récepteurs dans chaque RU qui peuvent prendre en charge une entrée multiple-sortie multiple, MIMO, multi-utilisateur, MU ;
la détermination (2015) d'une allocation RU pour la pluralité de récepteurs pour recevoir l'information dédiée et une donnée ; et
la transmission (2020), dans l'information de préambule HE commune de la seconde partie de préambule WLAN (220), d'une indication de l'allocation RU, l'allocation RU acheminant un nombre de récepteurs dans chaque RU de l'allocation RU déterminée.

2. Le procédé selon la revendication 1, dans lequel l'indication comprend une information de mappage RU et un nombre de récepteurs multiplexés spatialement pour recevoir une donnée dans une ou plusieurs des RU.

3. Le procédé selon la revendication 2, dans lequel le nombre de récepteurs multiplexés spatialement n'est signalé que pour des tailles de RU qui peuvent prendre en charge un multiplexage spatial sur de multiples récepteurs.

4. Le procédé selon la revendication 2, dans lequel la prise en charge du multiplexage spatial sur de multiples récepteurs est autorisée pour des tailles de RU supérieures ou égales à une valeur de taille de RU de seuil.

5. Le procédé selon la revendication 2, dans lequel l'information de mappage RU comprend un nombre de bits qui indiquent un nombre et une taille d'allocations RU dans la transmission pour une ou plusieurs sous-bandes de l'ensemble de sous-bandes.

6. Le procédé selon la revendication 2, dans lequel l'allocation RU achemine un nombre de récepteurs actifs dans chaque RU allouée dans une ou plusieurs sous-bandes de l'ensemble de sous-bandes.

7. Le procédé selon la revendication 2, dans lequel le nombre de récepteurs multiplexés spatialement indique un nombre de récepteurs multiplexés en utilisant un mode de transmission MIMO-MU.

8. Le procédé selon la revendication 2, dans lequel le dispositif sans fil est un terminal de communication sans fil et comprend en outre une antenne et un émetteur-récepteur.

9. Un appareil pour une communication sans fil, comprenant :
des moyens pour identifier une largeur de bande de transmission pour une trame sans fil (200, 200-a), la trame sans fil (200, 200-a) incluant une première partie de préambule de réseau local sans fil, WLAN, (205, 215, 215-a), une seconde partie de préambule WLAN (220), et une partie de donnée (235, 235-a), et la largeur de bande de transmission ayant un ensemble de sous-bandes, dans lequel la première partie de préambule WLAN (205, 215, 215-a) comprend une partie de préambule héritée (205) et la seconde partie de préambule WLAN (220) comprend une partie de préambule à haute efficacité, HE ;
des moyens pour identifier une information de préambule à transmettre à une pluralité de récepteurs, l'information de préambule incluant une information de préambule HE commune pour la pluralité de récepteurs et une information dédiée pour des récepteurs particuliers de la pluralité de récepteurs et l'information de préambule comprenant un premier nombre de bits pour acheminer une séparation de l'ensemble de sous-bandes en unités de ressource, RU, et un second nombre de bits pour indiquer un nombre de récepteurs dans chaque RU qui peuvent prendre en charge une entrée multiple-sortie multiple, MIMO, multi-utilisateur, MU ;
des moyens pour déterminer une allocation RU pour la pluralité de récepteurs pour recevoir l'information dédiée et une donnée ; et
des moyens pour transmettre, dans l'information de préambule HE commune de la seconde partie de préambule WLAN (220), une indication de l'allocation RU, l'allocation RU acheminant un nombre de récepteurs dans chaque RU de l'allocation RU déterminée.

10. L'appareil selon la revendication 9, dans lequel l'indication comprend une information de mappage RU et un nombre de récepteurs multiplexés spatialement pour recevoir une donnée dans une ou plusieurs des RU.

11. Un support lisible par calculateur stockant un code pour une communication sans fil, le code comprenant des instructions exécutables pour effectuer un procédé selon l'une quelconque des revendications 1 à 8.
